# EUROPEAN PATENT APPLICATION

(11) **EP 4 697 452 A1**
(43) Date of publication of application: **18.02.2026**
(21) Application number: 24806052.7
(22) Date of filing: 08.01.2024
(51) Int. Cl.: H01M 10/613

(54) **IMMERSION LIQUID-COOLING ENERGY STORAGE SYSTEM**

(30) Priority: 16.05.2023 CN 202310553546
(71) Applicant: Huawei Digital Power Technologies Co., Ltd., Shenzhen, Guangdong 518043 (CN)
(72) Inventor: LI, Malin, Shenzhen, Guangdong 518043 (CN)
(74) Representative: Gill Jennings & Every LLP
(86) International application number: PCT/CN2024/071141
(87) International publication number: WO 2024/234688

(57) **Abstract**

This application provides an immersion liquid cooling energy storage system. The immersion liquid cooling energy storage system includes an energy storage module, a thermal management module, a heat dissipation module, a pipe system, and a valve module. The energy storage module includes a battery liquid-collecting tank, a battery capsule, and a battery. The battery liquid-collecting tank is configured to accommodate the battery capsule, the battery liquid-collecting tank is filled with a first heat transfer medium, and the first heat transfer medium is configured to heat or cool the battery capsule. The battery capsule is configured to accommodate the battery, the battery capsule is filled with a second heat transfer medium, and the second heat transfer medium is configured to heat or cool the battery. The thermal management module is configured to heat or cool the first heat transfer medium. The heat dissipation module is configured to dissipate heat generated by the immersion liquid cooling energy storage system to an external environment. The valve module and the pipe system are configured to connect the energy storage module, the thermal management module, and the heat dissipation module, and the first heat transfer medium circulates among the energy storage module, the thermal management module, and the heat dissipation module. The immersion liquid cooling energy storage system provided in this application can improve temperature uniformity of the battery.

## Description

### TECHNICAL FIELD

Embodiments of this application relate to the field of energy technologies, and more specifically, to an immersion liquid cooling energy storage system.

### BACKGROUND

Replacement of conventional fossil energy by new energy is a key to achieve "carbon peaking and carbon neutrality" goals. Energy transformation changes a conventional energy pattern and promotes rapid development of electric vehicles and the energy storage industry. However, charging and discharging efficiency, a capacity, safety, and a life of a lithium battery are greatly affected by a temperature, and an excessively high or excessively low temperature or a large temperature difference between battery groups directly affects performance of the lithium battery. Therefore, the battery needs to run at an appropriate temperature, to fully utilize performance of the battery.

At present, an indirect contact liquid cooling (namely, cold plate liquid cooling) manner is usually used to cool a battery. To be specific, a liquid cooling plate is attached to a wall of a battery module by using a thermally conductive medium, heat generated by the battery is transferred to a cooling working medium inside the liquid cooling plate through the thermally conductive medium, and then the heat is taken away by a flowing cooling working medium. However, in the indirect contact liquid cooling manner, there is high thermal resistance for heat transfer between the battery module and the liquid cooling plate and a limited area of heat exchange between the battery module and the liquid cooling plate, and it is difficult to directly cool a high-heat generating part such as a battery tab, resulting in a high temperature of the battery tab and poor overall temperature uniformity of the battery.

### SUMMARY

Embodiments of this application provide an immersion liquid cooling energy storage system, to improve temperature uniformity of a battery, so that the battery can operate at a relatively appropriate temperature, and performance of the battery is fully utilized.

According to a first aspect, an immersion liquid cooling energy storage system is provided. The immersion liquid cooling energy storage system includes an energy storage module, a thermal management module, a heat dissipation module, a pipe system, and a valve module. The energy storage module includes a battery liquid-collecting tank, a battery capsule, and a battery. The battery liquid-collecting tank is configured to accommodate the battery capsule, the battery liquid-collecting tank is filled with a first heat transfer medium, and the first heat transfer medium is configured to heat or cool the battery capsule. The battery capsule is configured to accommodate the battery, the battery capsule is filled with a second heat transfer medium, and the second heat transfer medium is configured to heat or cool the battery. The thermal management module is configured to heat or cool the first heat transfer medium. The heat dissipation module is configured to dissipate heat generated by the immersion liquid cooling energy storage system to an external environment. The valve module and the pipe system are configured to connect the energy storage module, the thermal management module, and the heat dissipation module, and the first heat transfer medium circulates among the energy storage module, the thermal management module, and the heat dissipation module.

In this embodiment of this application, the battery exchanges heat with the second heat transfer medium through direct contact, so that thermal resistance for heat transfer is low. Therefore, efficiency in cooling or heating the battery can be effectively improved. The second heat transfer medium has a large area of contact with the battery, and may be in contact with a high-heat generating part (for example, a battery tab). Temperature uniformity of the battery is improved by increasing an area of heat exchange. In the immersion liquid cooling energy storage system, when the battery has a low temperature and needs to be heated, the first heat transfer medium may be heated by using the thermal management module; or when the battery has a high temperature and needs to dissipate heat, the first heat transfer medium may be cooled by using the thermal management module, or the heat dissipation module may be used for heat dissipation. In other words, the battery is indirectly heated or cooled by heating or cooling the first heat transfer medium. In this way, the battery operates at a relatively appropriate temperature, and performance of the battery is fully utilized.

With reference to the first aspect, in some implementations of the first aspect, heat dissipation fins are disposed on an inner surface of the battery capsule, or heat dissipation fins are disposed on an outer surface of the battery capsule, or heat dissipation fins are disposed on both an inner surface and an outer surface of the battery capsule.

In this embodiment of this application, the heat dissipation fins are disposed on the inner surface of the battery capsule, so that an area of contact between the second heat transfer medium and the inner surface of the battery capsule can be increased, to enhance effect of heat transfer between the second heat transfer medium and the outer surface of the battery capsule, improve cooling or heating efficiency of the second heat transfer medium, and further improve efficiency in cooling or heating the battery. The heat dissipation fins are disposed on the outer surface of the battery capsule, so that an area of contact between the first heat transfer medium and the outer surface of the battery capsule can be increased, to enhance effect of heat transfer between the first heat transfer medium and the inner surface of the battery capsule, improve cooling or heating efficiency of the second heat transfer medium, and further improve efficiency in cooling or heating the battery.

With reference to the first aspect, in some implementations of the first aspect, the battery is partially or completely immersed in the second heat transfer medium. The battery includes but is not limited to any one of the following types: a prismatic battery, a pouch battery, and a cylindrical battery.

In this embodiment of this application, the battery tab can be immersed in the second heat transfer medium, so that the battery tab can be cooled or heated. This can resolve a problem that the battery tab cannot be effectively cooled or heated, and avoid an excessively large temperature difference of a cell body.

With reference to the first aspect, in some implementations of the first aspect, the battery capsule is of a fully sealed structure.

In this embodiment of this application, disposing the battery capsule as a fully sealed structure can ensure gas tightness of a cavity, and avoid leakage of a gas-phase working medium.

With reference to the first aspect, in some implementations of the first aspect, the first heat transfer medium includes any one of the following: oil, a fluorinated liquid, an ethylene glycol aqueous solution, nanofluid, and a phase change emulsion; and the second heat transfer medium is an insulating heat transfer medium, for example, may be an oil working medium or a fluorinated liquid working medium.

It should be noted that, because the second heat transfer medium is in direct contact with the battery, the second heat transfer medium is an insulating heat transfer medium. In other words, the second heat transfer medium may be a single-phase insulating heat transfer medium, or may be a two-phase insulating heat transfer medium. The first heat transfer medium may include all types of heat transfer media. In other words, the first heat transfer medium may be an insulating heat transfer medium, or may be a non-insulating heat transfer medium. For example, the first heat transfer medium may be oil, a fluorinated liquid, an ethylene glycol aqueous solution, nanofluid, a phase change emulsion, or the like. This is not limited in this application.

With reference to the first aspect, in some implementations of the first aspect, the heat dissipation module includes a heat dissipator and a fan; and the valve module is configured to be connected between the heat dissipator and the battery liquid-collecting tank, and is configured to connect or disconnect a path between the heat dissipator and the battery liquid-collecting tank.

In this embodiment of this application, after the valve module connects the path between the heat dissipator and the battery liquid-collecting tank, the first heat transfer medium can flow between the heat dissipator and the battery liquid-collecting tank, so that heat in the first heat transfer medium can be dissipated to the external environment, to reduce a temperature of the battery. In this way, the battery operates at a relatively appropriate temperature, and performance of the battery is fully utilized.

With reference to the first aspect, in some implementations of the first aspect, the thermal management module includes a compressor, a condenser, a first throttle valve, and an evaporator that are sequentially connected through the pipe system.

In a possible implementation, the valve module may be connected between the battery liquid-collecting tank in the energy storage module and the evaporator, and is configured to connect or disconnect a path between the battery liquid-collecting tank and the evaporator. After the valve module connects the path between the battery liquid-collecting tank and the evaporator, the evaporator can effectively exchange heat with the battery liquid-collecting tank. In other words, the first heat transfer medium can flow between the evaporator and the battery liquid-collecting tank, so that a temperature of the first heat transfer medium can be reduced, to indirectly reduce a temperature of the battery. In this way, the battery operates at a relatively appropriate temperature, and performance of the battery is fully utilized.

In another possible implementation, the valve module may be connected between the battery liquid-collecting tank in the energy storage module and the condenser, and is configured to connect or disconnect a path between the battery liquid-collecting tank and the condenser. After the valve module connects the path between the battery liquid-collecting tank and the condenser, the condenser can effectively exchange heat with the battery liquid-collecting tank. In other words, the first heat transfer medium can flow between the condenser and the battery liquid-collecting tank, so that a temperature of the first heat transfer medium can be increased, to indirectly increase a temperature of the battery. In this way, the battery operates at a relatively appropriate temperature, and performance of the battery is fully utilized.

With reference to the first aspect, in some implementations of the first aspect, the immersion liquid cooling energy storage system further includes an electric heater, and the electric heater is configured to heat the first heat transfer medium.

In this embodiment of this application, when the battery has a low temperature, the electric heater may be increased to electrically heat the first heat transfer medium, so that a temperature of the first heat transfer medium can be increased, to indirectly increase a temperature of the battery. In this way, the battery operates at a relatively appropriate temperature, and performance of the battery is fully utilized.

With reference to the first aspect, in some implementations of the first aspect, the immersion liquid cooling energy storage system further includes a power module. The power module includes a power device liquid-collecting tank, a power device capsule, and a power device. The power device liquid-collecting tank is configured to accommodate the power device capsule, the power device liquid-collecting tank is filled with the first heat transfer medium, and the first heat transfer medium is configured to cool the power device capsule. The power device capsule is configured to accommodate the power device, the power device capsule is filled with the second heat transfer medium, and the second heat transfer medium is configured to cool the power device. The power device is connected to the battery and is configured to control charging or discharging of the battery.

In this embodiment of this application, the power device may also be immersed in the second heat transfer medium in an immersion manner, and the power device exchanges heat with the second heat transfer medium through direct contact, so that thermal resistance for heat transfer is low. Therefore, efficiency in cooling the power device can be effectively improved.

In a possible implementation, heat dissipation fins are disposed on an inner surface of the power device capsule, or heat dissipation fins are disposed on an outer surface of the power device capsule, or heat dissipation fins are disposed on both an inner surface and an outer surface of the power device capsule. It should be understood that the heat dissipation fins may be configured to increase an area of contact between the second heat transfer medium and the inner surface or the outer surface of the power device capsule, to improve heat transfer efficiency.

In a possible implementation, the power module includes a power device and a heat exchange plate; and the heat exchange plate is in heat conduction contact with the power device, and is configured to dissipate heat from the power device. The first heat transfer medium may flow through the heat exchange plate to take away heat generated by the power device.

With reference to the first aspect, in some implementations of the first aspect, the valve module and the pipe system are further configured to connect the power module to the energy storage module, and the first heat transfer medium circulates among the energy storage module, the thermal management module, the heat dissipation module, and the power module.

In this embodiment of this application, the valve module may alternatively be connected between the power module and the energy storage module, and is configured to connect or disconnect a path between the power module and the energy storage module. After the valve module connects the path between the power module and the energy storage module, the power module can effectively exchange heat with the energy storage module. In other words, the battery may directly obtain heat generated by the power device for heat recovery, to reduce energy consumption of the immersion liquid cooling energy storage system and reduce costs. In addition, the battery and the power device can keep operating at a relatively appropriate temperature, and performance of the battery and the power device is fully utilized.

In a possible implementation, the valve module may alternatively be connected between the power module and the heat dissipation module, and is configured to connect or disconnect a path between the power module and the heat dissipation module. After the valve module connects the path between the power module and the heat dissipation module, the power device in the power module can effectively exchange heat with the heat dissipator in the heat dissipation module. During actual application, when the power device generates high heat, the heat may be transferred to the heat dissipator through a path between the heat exchange plate and the heat dissipator, so that the power device is in a normal operating temperature range, and performance of the power device is fully utilized.

With reference to the first aspect, in some implementations of the first aspect, a running mode of the immersion liquid cooling energy storage system includes a heating mode and a cooling mode. In response to a temperature of the battery being less than a first preset value, the immersion liquid cooling energy storage system runs in the heating mode, and the thermal management module is configured to heat the first heat transfer medium. In response to a temperature of the battery being greater than a second preset value, the immersion liquid cooling energy storage system runs in the cooling mode, and the thermal management module is configured to cool the first heat transfer medium.

In this embodiment of this application, the immersion liquid cooling energy storage system may adjust a system running mode according to a range of a temperature of the battery. When the temperature of the battery is low, the immersion liquid cooling energy storage system may run in the heating mode. When the temperature of the battery is high, the immersion liquid cooling energy storage system may run in the cooling mode. In other words, the battery is indirectly heated or cooled by heating or cooling the first heat transfer medium. In this way, the battery operates at a relatively appropriate temperature, and performance of the battery is fully utilized.

With reference to the first aspect, in some implementations of the first aspect, the immersion liquid cooling energy storage system performs, in response to the immersion liquid cooling energy storage system running in the heating mode, at least one of the following operations: controlling the valve module to connect a path between a condenser in the thermal management module and the battery liquid-collecting tank in the energy storage module; controlling the valve module to connect a path between a power device liquid-collecting tank in the power module and the battery liquid-collecting tank in the energy storage module; or starting an electric heater. Alternatively, the immersion liquid cooling energy storage system performs, in response to the immersion liquid cooling energy storage system running in the cooling mode, at least one of the following operations: controlling the valve module to connect a path between the battery liquid-collecting tank in the energy storage module and a heat dissipator in the heat dissipation module; or controlling the valve module to connect a path between the battery liquid-collecting tank in the energy storage module and an evaporator in the thermal management module.

In this embodiment of this application, the immersion liquid cooling energy storage system may choose to perform different operations based on different running modes, so that the battery can be indirectly heated or cooled by heating or cooling the first heat transfer medium. In this way, the battery operates at a relatively appropriate temperature, and performance of the battery is fully utilized.

With reference to the first aspect, in some implementations of the first aspect, the thermal management module includes a second throttle valve and a dehumidification evaporator, and the compressor, the condenser, the second throttle valve, and the dehumidification evaporator are sequentially connected through the pipe system to form a dehumidification loop; and in response to humidity of air in the battery liquid-collecting tank being greater than a first threshold, the dehumidification loop is configured to reduce the humidity of the air in the battery liquid-collecting tank or humidity of air in the power device liquid-collecting tank.

In this embodiment of this application, the compressor, the condenser, the second throttle valve, and the dehumidification evaporator in the thermal management module may form a dehumidification loop, and the dehumidification evaporator may perform dehumidification, so that a related electronic component in the immersion liquid cooling energy storage system operates in a relatively dry environment, to avoid a bad case such as corrosion or a short circuit.

### BRIEF DESCRIPTION OF DRAWINGS

FIG. 1 is a diagram of a structure of an immersion liquid cooling energy storage system according to an embodiment of this application;
FIG. 2 is a diagram of a structure of an energy storage module according to an embodiment of this application;
FIG. 3 is a diagram of a structure of another immersion liquid cooling energy storage system according to an embodiment of this application;
FIG. 4 is a diagram of a flow path of a medium in an immersion liquid cooling energy storage system according to an embodiment of this application;
FIG. 5 is a diagram of a flow path of a medium in another immersion liquid cooling energy storage system according to an embodiment of this application;
FIG. 6 is a diagram of a flow path of a medium in another immersion liquid cooling energy storage system according to an embodiment of this application;
FIG. 7 is a diagram of a flow path of a medium in another immersion liquid cooling energy storage system according to an embodiment of this application;
FIG. 8 is a diagram of a flow path of a medium in another immersion liquid cooling energy storage system according to an embodiment of this application;
FIG. 9 is a diagram of a flow path of a medium in another immersion liquid cooling energy storage system according to an embodiment of this application;
FIG. 10 is a diagram of a flow path of a medium in another immersion liquid cooling energy storage system according to an embodiment of this application;
FIG. 11 is a diagram of a flow path of a medium in another immersion liquid cooling energy storage system according to an embodiment of this application;
FIG. 12 is a diagram of a flow path of a medium in another immersion liquid cooling energy storage system according to an embodiment of this application;
FIG. 13 is a diagram of a flow path of a medium in another immersion liquid cooling energy storage system according to an embodiment of this application;
FIG. 14 is a diagram of a flow path of a medium in another immersion liquid cooling energy storage system according to an embodiment of this application;
FIG. 15 is a diagram of a flow path of a medium in another immersion liquid cooling energy storage system according to an embodiment of this application;
FIG. 16 is a diagram of a flow path of a medium in another immersion liquid cooling energy storage system according to an embodiment of this application;
FIG. 17 is a diagram of a flow path of a medium in another immersion liquid cooling energy storage system according to an embodiment of this application; and
FIG. 18 is a diagram of a flow path of a medium in another immersion liquid cooling energy storage system according to an embodiment of this application.

### DESCRIPTION OF EMBODIMENTS

The following describes technical solutions in embodiments of this application with reference to accompanying drawings.

For ease of understanding of embodiments of this application, the following descriptions are provided before embodiments of this application are described.

In embodiments of this application, the terms "first" and "second" are merely intended for a purpose of description, and shall not be understood as an indication or implication of relative importance or an implicit indication of a quantity of indicated technical features. Therefore, a feature defined by "first" or "second" may explicitly or implicitly include one or more features. In addition, in the descriptions of embodiments of this application, "a plurality of' means two or more, and "at least one" and "one or more" mean one, two, or more. The singular expression forms "one", "a", "the", "the foregoing", "this", and "the one" are also intended to include an expression form such as "one or more", unless the opposite is explicitly indicated in the context thereof. Sequence numbers of the following processes do not mean an execution sequence. The execution sequence of the processes should be determined based on functions and internal logic of the processes, and shall not constitute any limitation on an implementation process of embodiments of this application. For example, in embodiments of this application, expressions such as "111", "112", and "113" are merely identifiers for ease of description, and are not intended to limit a sequence of performing steps.

Reference to "an embodiment", "some embodiments", or the like described in this specification indicates that one or more embodiments of this application include a specific feature, structure, or characteristic described with reference to embodiments. Therefore, expressions such as "in an embodiment", "in some embodiments", "in some other embodiments", and "in other embodiments" that appear at different places in this specification do not necessarily mean reference to a same embodiment. Instead, the expressions mean "one or more but not all of embodiments", unless otherwise specifically emphasized in another manner. The terms "include", "comprise", "have", and their variants all mean "include but are not limited to", unless otherwise specifically emphasized in another manner.

Replacement of conventional fossil energy by new energy is a key to achieve "carbon peaking and carbon neutrality" goals. Energy transformation changes a conventional energy pattern and promotes rapid development of electric vehicles and the energy storage industry. However, charging and discharging efficiency, a capacity, safety, and a life of a lithium battery are greatly affected by a temperature, and an excessively high or excessively low temperature or a large temperature difference between battery groups directly affects performance of the lithium battery. Therefore, the battery needs to run at an appropriate temperature, to fully utilize performance of the battery.

At present, an indirect contact liquid cooling (namely, cold plate liquid cooling) manner is usually used to cool a battery. To be specific, a liquid cooling plate is attached to a wall of a battery module by using a thermally conductive medium, heat generated by the battery is transferred to a cooling working medium inside the cold plate through the thermally conductive medium, and then the heat is taken away by a flowing cooling working medium. When the indirect contact liquid cooling manner is used to cool the battery, there is high thermal resistance for heat transfer between the battery module and the liquid cooling plate and a limited area of heat exchange between the battery module and the liquid cooling plate, and it is difficult to directly cool a high-heat generating part such as a battery tab, resulting in a high temperature of the battery tab and poor overall temperature uniformity of the battery.

Therefore, embodiments of this application provide an immersion liquid cooling energy storage system, to improve temperature uniformity of a battery, so that the battery can operate at a relatively appropriate temperature, and performance of the battery is fully utilized.

It should be noted that the immersion liquid cooling energy storage system provided in embodiments of this application may be applied to scenarios such as home energy storage, industrial energy storage, a data center, a power station, and vehicle charging.

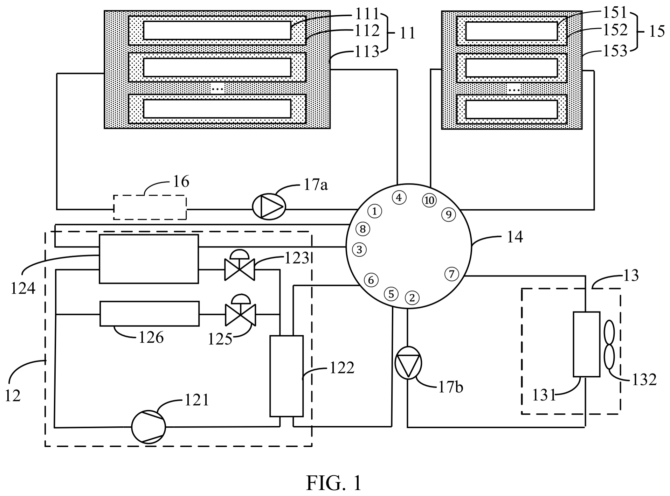

FIG. 1 is a diagram of a structure of an immersion liquid cooling energy storage system according to an embodiment of this application.

The immersion liquid cooling energy storage system includes an energy storage module 11, a thermal management module 12, a heat dissipation module 13, a pipe system, and a valve module 14. The energy storage module 11 includes a battery 111, a battery capsule 112, and a battery liquid-collecting tank 113. The battery liquid-collecting tank 113 is configured to accommodate the battery capsule 112, the battery liquid-collecting tank 113 is filled with a first heat transfer medium, and the first heat transfer medium is configured to heat or cool the battery capsule 112. The battery capsule 112 is configured to accommodate the battery 111, the battery capsule 112 is filled with a second heat transfer medium, and the second heat transfer medium is configured to heat or cool the battery 111. The thermal management module 12 is configured to heat or cool the first heat transfer medium. The heat dissipation module 13 is configured to dissipate heat generated by the immersion liquid cooling energy storage system to an external environment. The valve module 14 and the pipe system are configured to connect the energy storage module 11, the thermal management module 12, and the heat dissipation module 13, and the first heat transfer medium circulates among the energy storage module 11, the thermal management module 12, and the heat dissipation module 13.

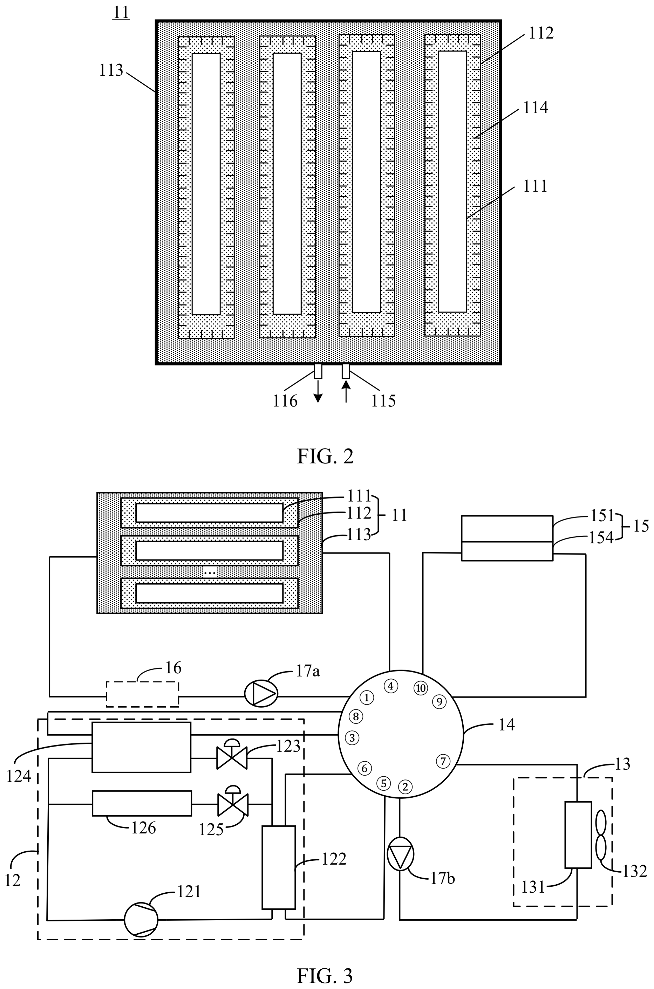

For a specific structure of the energy storage module 11, refer to FIG. 2. FIG. 2 is a diagram of a structure of an energy storage module according to this application.

In some embodiments, as shown in FIG. 2, at least one liquid inlet 115 and at least one liquid outlet 116 are provided on a side surface of the battery liquid-collecting tank 113, the first heat transfer medium flows into the battery liquid-collecting tank 113 through the liquid inlet 115, and the first heat transfer medium flows out of the battery liquid-collecting tank 113 through the liquid outlet 116.

In some embodiments, heat dissipation fins 114 are disposed on an inner surface of the battery capsule 112, or heat dissipation fins 114 are disposed on an outer surface of the battery capsule 112, or heat dissipation fins 114 are disposed on both an inner surface and an outer surface of the battery capsule 112. The heat dissipation fins 114 are disposed on the inner surface of the battery capsule 112, so that an area of contact between the second heat transfer medium and the inner surface of the battery capsule 112 can be increased, to enhance effect of heat transfer between the second heat transfer medium and the outer surface of the battery capsule 112, improve cooling or heating efficiency of the second heat transfer medium, and further improve efficiency in cooling or heating the battery 111. The heat dissipation fins 114 are disposed on the outer surface of the battery capsule 112, so that an area of contact between the first heat transfer medium and the outer surface of the battery capsule 112 can be increased, to enhance effect of heat transfer between the first heat transfer medium and the inner surface of the battery capsule 112, improve cooling or heating efficiency of the second heat transfer medium, and further improve efficiency in cooling or heating the battery 111.

In some embodiments, the battery 111 is partially or completely immersed in the second heat transfer medium. In other words, a battery tab can be immersed in the second heat transfer medium, so that the battery tab can be cooled or heated. This can resolve a problem that the battery tab cannot be effectively cooled or heated, and avoid an excessively large temperature difference of a cell body. In addition, the battery exchanges heat with the second heat transfer medium through direct contact, so that thermal resistance for heat transfer is low. Therefore, efficiency in cooling or heating the battery can be effectively improved. The battery 111 includes but is not limited to any one of the following types: a prismatic battery, a pouch battery, and a cylindrical battery.

In some embodiments, the battery capsule 112 may be of a fully sealed structure. Disposing the battery capsule 112 as a fully sealed structure can ensure gas tightness of a cavity, and avoid leakage of a gas-phase working medium.

It should be understood that, the first heat transfer medium includes any one of the following: oil, a fluorinated liquid, an ethylene glycol aqueous solution, nanofluid, and a phase change emulsion; and the second heat transfer medium is an insulating heat transfer medium, for example, may be an oil working medium or a fluorinated liquid working medium.

It should be noted that, because the second heat transfer medium is in direct contact with the battery 111, the second heat transfer medium is an insulating heat transfer medium. In other words, the second heat transfer medium may be a single-phase insulating heat transfer medium, or may be a two-phase insulating heat transfer medium. The first heat transfer medium may include all types of heat transfer media. In other words, the first heat transfer medium may be an insulating heat transfer medium, or may be a non-insulating heat transfer medium. For example, the first heat transfer medium may be oil, a fluorinated liquid, an ethylene glycol aqueous solution, nanofluid, a phase change emulsion, or the like. This is not limited in this application.

In an example, the first heat transfer medium may be a single-phase insulating heat transfer medium (for example, oil). For example, when the battery 111 needs to dissipate heat, the single-phase insulating heat transfer medium may transfer heat of the battery 111 to the inner surface of the battery capsule 112 through heat conduction and heat convection, the inner surface of the battery capsule 112 transfers the heat to the outer surface of the battery capsule 112 through heat conduction, the outer surface of the battery capsule 112 is in contact with the second heat transfer medium and transfers the heat to the second heat transfer medium through convection heat exchange, and then the heat is taken out of the battery liquid-collecting tank 113 by the circulating second heat transfer medium.

In another example, the first heat transfer medium may be a two-phase insulating heat transfer medium (for example, a fluorinated liquid). For example, when the battery 111 needs to dissipate heat, heat generated by the battery 111 may be taken away from a surface of the battery 111 by the two-phase insulating heat transfer medium through heat conduction, heat convection, and boiling heat exchange. Specifically, when a temperature of the battery 111 is low in early and middle stages of discharging, the first heat transfer medium absorbs, through heat conduction and heat convection, heat generated by the battery 111. When the temperature of the battery 111 reaches a phase change temperature of the first heat transfer medium, the first heat transfer medium boils and absorbs a large amount of heat generated by the battery 111. The gas-phase first heat transfer medium moves to a top surface of the battery capsule 112 under effect of molecular thermal motion, and exchanges heat with the top surface of the battery capsule 112 through heat conduction and heat convection. The top surface of the battery capsule 112 exchanges heat with the second heat transfer medium through convection heat exchange. The second heat transfer medium indirectly absorbs heat of the first heat transfer medium, and then takes the heat out of the battery liquid-collecting tank 113 through circulation. The cooled first heat transfer medium condenses and then flows back to the battery capsule 112. This process is repeated to efficiently dissipate heat from the battery 111.

In embodiments of this application, quantities of battery liquid-collecting tankes 113, battery capsules 112, and batteries 111 are not limited. In this application, one or more battery liquid-collecting tankes, one or more battery capsules, and one or more batteries may be included. During actual application, the quantity of battery liquid-collecting tankes may be adjusted based on the quantity of battery capsules. In other words, battery capsules may be placed in one battery liquid-collecting tank or different battery liquid-collecting tankes. Similarly, the quantity of battery capsules may be adjusted based on the quantity of batteries. In other words, batteries may be placed in one battery capsule or different battery capsules.

The heat dissipation module 13 is configured to dissipate heat generated by the immersion liquid cooling energy storage system to an external environment. In some embodiments, the heat dissipation module 13 may include a heat dissipator 131, and the heat dissipator 131 may be configured to dissipate heat generated by the energy storage module 11, the thermal management module 12, or a power module 15 described below to the external environment. During specific disposing, a fan 132 may be disposed near the heat dissipator 131, and the fan 132 may be configured to accelerate a flow speed of air flowing through the heat dissipator 131, to improve heat dissipation performance of the heat dissipator 131.

In some embodiments, the valve module 14 may be connected between the heat dissipator 131 and the battery liquid-collecting tank 113, and is configured to connect or disconnect a path between the heat dissipator 131 and the battery liquid-collecting tank 113. When the path between the heat dissipator 131 and the battery liquid-collecting tank 113 is in a connected state, the first heat transfer medium may flow out of the battery liquid-collecting tank 113 and be transferred to the heat dissipator 131, the heat dissipator 131 may dissipate heat from the first heat transfer medium, and the first heat transfer medium after the heat dissipation may be transferred back to the battery liquid-collecting tank 113 through a pipe, so that heat generated by the battery 111 can be dissipated.

The thermal management module 12 is configured to heat or cool the first heat transfer medium. The thermal management module 12 includes a compressor 121, a condenser 122, a first throttle valve 123, and an evaporator 124 that are sequentially connected through the pipe system. In other words, the compressor 121, the condenser 122, the first throttle valve 123, and the evaporator 124 are sequentially connected through a pipe, to form a closed system. A refrigerant continuously circulates in the system, changes a status, and exchanges heat with the outside.

In some embodiments, the evaporator 124 in the thermal management module 12 may communicate with the battery liquid-collecting tank 113 in the energy storage module 11, and the evaporator 124 may be configured to cool the first heat transfer medium flowing out of the battery liquid-collecting tank 113. During specific disposing, the valve module 14 may be connected between the evaporator 124 and the battery liquid-collecting tank 113, and is configured to connect or disconnect a path between the evaporator 124 and the battery liquid-collecting tank 113. When the battery 111 needs to dissipate heat, the valve module 14 may be used to connect the path between the evaporator 124 and the battery liquid-collecting tank 113. In this case, the first heat transfer medium may be transferred from the battery liquid-collecting tank 113 to the evaporator 124, the evaporator 124 may cool the first heat transfer medium, and the cooled first heat transfer medium may be transferred back to the battery liquid-collecting tank 113 through a pipe, to cool the battery 111 and avoid an excessively high temperature of the battery 111, so that the battery 111 runs at an appropriate temperature, and performance of the battery 111 is fully utilized.

It should be noted that two independent passages may be disposed in the evaporator 124, one passage may transfer the first heat transfer medium, and the other passage may transfer a refrigerant. In the evaporator 124, the refrigerant may exchange heat with the first heat transfer medium, to reduce a temperature of the first heat transfer medium. Therefore, the evaporator 124 may be regarded as a heat exchange device.

In some other embodiments, the condenser 122 in the thermal management module 12 may communicate with the battery liquid-collecting tank 113 in the energy storage module 11, and the condenser 122 may be configured to heat the first heat transfer medium flowing out of the battery liquid-collecting tank 113. During specific disposing, the valve module 14 may be connected between the condenser 122 and the battery liquid-collecting tank 113, and is configured to connect or disconnect a path between the condenser 122 and the battery liquid-collecting tank 113. When the battery 111 needs to be heated, the valve module 14 may be used to connect the path between the condenser 122 and the battery liquid-collecting tank 113. In this case, the first heat transfer medium may be transferred from the battery liquid-collecting tank 113 to the condenser 122, the condenser 122 may heat the first heat transfer medium, and the heated first heat transfer medium may be transferred back to the battery liquid-collecting tank 113 through a pipe, to heat the battery 111 and avoid an excessively low temperature of the battery 111, so that the battery 111 runs at an appropriate temperature, and performance of the battery 111 is fully utilized.

It should be noted that two independent passages may also be disposed in the condenser 122, one passage is configured to transfer the first heat transfer medium, and the other passage is configured to transfer a refrigerant. In the condenser 122, the refrigerant may exchange heat with the first heat transfer medium, to increase a temperature of the first heat transfer medium. Therefore, the condenser 122 may also be regarded as a heat exchange device.

Considering that the battery has an optimal operating temperature, heat needs to be dissipated from the battery when a temperature of the battery is high, and heat needs to be provided to the battery when a temperature of the battery is low, to ensure that the battery operates at a normal temperature and fully utilize performance of the battery.

In some embodiments, if temperatures of some regions in summer are relatively low, that is, some regions are low-temperature regions, the thermal management module 12 may not be disposed in the immersion liquid cooling energy storage system. In other words, heat dissipation of the battery 111 and a power device 151 can be completed through natural heat dissipation of the heat dissipation module 13. In some other embodiments, if temperatures of some regions in summer are relatively high, that is, some regions are medium-high temperature regions, the thermal management module 12 may be disposed in the immersion liquid cooling energy storage system. In other words, in a high-temperature scenario in summer, an outdoor temperature is very high, and relying solely on natural heat dissipation of the heat dissipation module 13 may not meet heat dissipation requirements of the battery 111 and the power device 151. In this case, participation of the thermal management module 12 is further required. To be specific, the compressor 121 needs to be started for mechanical cooling.

The thermal management module 12 may further include a second throttle valve 125 and a dehumidification evaporator 126. The dehumidification evaporator 126 may be configured to remove water vapor in the immersion liquid cooling energy storage system, so that a related electronic component (for example, a power device or a line) in the immersion liquid cooling energy storage system keeps operating in a relatively dry environment, to avoid a bad case such as corrosion or a short circuit and avoid a bad case such as corrosion or a short circuit. This helps ensure reliability and a service life of the electronic component. It should be understood that the compressor 121, the condenser 122, the second throttle valve 125, and the dehumidification evaporator 126 may be sequentially connected through the pipe system to form a dehumidification loop. When a refrigerant circulates in a path including the compressor 121, the condenser 122, the second throttle valve 125, and the dehumidification evaporator 126, a temperature of the dehumidification evaporator 126 is low, so that water vapor in the immersion liquid cooling energy storage system condenses into water, to reduce humidity of the immersion liquid cooling energy storage system. It should be understood that a fan may be disposed near the dehumidification evaporator 126, to accelerate an air circulation speed, so as to accelerate an air dehumidification speed.

It should be noted that, in some embodiments, the valve module 14 may alternatively be connected between the heat dissipator 131 and the condenser 122, and is configured to connect or disconnect a path between the heat dissipator 131 and the condenser 122. During dehumidification, a temperature of the condenser 122 is high. In this case, to reduce the temperature of the condenser 122, the valve module 14 may be used for the condenser 122 to communicate with the heat dissipator 131, so that the heat dissipator 131 can cool the condenser 122, to avoid an excessively high temperature of the condenser 122. In some other embodiments, a fan may be disposed near the condenser 122, and the fan is used to dissipate heat from the condenser 122.

In the examples provided in this application, a combination of the evaporator 124 and the first throttle valve 123 is disposed in parallel with a combination of the dehumidification evaporator 126 and the second throttle valve 125, so that the two combinations do not affect each other. Specifically, during dehumidification, the second throttle valve 125 may be opened and the first throttle valve 123 may be closed. In this case, a refrigerant may circulate in the path including the compressor 121, the condenser 122, the second throttle valve 125, and the dehumidification evaporator 126, so that the dehumidification evaporator 126 has a low temperature, to implement a dehumidification function. In addition, the first throttle valve 123 and the second throttle valve 125 may be simultaneously opened. In other words, a refrigerant can circulate in a path including the compressor 121, the condenser 122, the first throttle valve 123, and the evaporator 124, and can further circulate in the path including the compressor 121, the condenser 122, the second throttle valve 125, and the dehumidification evaporator 126. In this way, both the evaporator 124 and the dehumidification evaporator 126 have low temperatures. In other words, the dehumidification evaporator 126 is used to implement the dehumidification function, and the evaporator 124 is used to implement a function of cooling the battery 111. Certainly, during specific implementation, the first throttle valve 123 may alternatively be opened and the second throttle valve 125 may alternatively be closed. In this case, a refrigerant may circulate in the path including the compressor 121, the condenser 122, the first throttle valve 123, and the evaporator 124, so that the evaporator 124 has a low temperature, to implement the function of cooling the battery 111. In summary, in the examples provided in this application, the evaporator 124 and the dehumidification evaporator 126 are decoupled from each other, so that mutual impact between the evaporator 124 and the dehumidification evaporator 126 can be avoided.

In some embodiments, the immersion liquid cooling energy storage system may further include a power module 15. For a structure of the power module 15, refer to FIG. 1 and FIG. 3. A power device 151 is connected to the battery 111, and is configured to control charging or discharging of the battery 111. The power device 151 may be specifically a direct current-alternating current converter, or may be a direct current-direct current converter. To be specific, the power device 151 may include a direct current-alternating current conversion component, or may include a direct current-direct current conversion component, a control unit, and the like. During specific application, a specific type of the power device 151 may be properly selected according to an actual requirement. This is not limited in this application. The power module 15 uses an immersion liquid cooling structure or an indirect contact liquid cooling structure.

For example, the power module 15 shown in FIG. 1 uses an immersion liquid cooling structure. The power module 15 includes a power device liquid-collecting tank 153, a power device capsule 152, and a power device 151. The power device liquid-collecting tank 153 is configured to accommodate the power device capsule 152, the power device liquid-collecting tank 153 is filled with the first heat transfer medium, and the first heat transfer medium is configured to cool the power device capsule 152. The power device capsule 152 is configured to accommodate the power device 151, the power device capsule 152 is filled with the second heat transfer medium, and the second heat transfer medium is configured to directly cool the power device 151.

In an example, the valve module 14 is connected between the power device liquid-collecting tank 153 and the battery liquid-collecting tank 113, and is configured to connect or disconnect a path between the power device liquid-collecting tank 153 and the battery liquid-collecting tank 113. The power device 151 generates heat during operation, and the heat may be transferred to a surface of the battery 111 through the path between the power device liquid-collecting tank 153 and the battery liquid-collecting tank 113 when the temperature of the battery 111 is low, so that the heat generated by the power device 151 can be properly used, and the temperature of the battery 111 can be increased while a temperature of the power device 151 is reduced. In this way, both the battery 111 and the power device 151 can operate at an appropriate temperature, and performance of the battery 111 and the power device 151 is fully utilized.

In another example, the valve module 14 is connected between the power device liquid-collecting tank 153 and the heat dissipator 131, and is configured to connect or disconnect a path between the power device liquid-collecting tank 153 and the heat dissipator 131. During actual application, when the power device 151 generates high heat, the heat may be transferred to the heat dissipator 131 through the path between the power device liquid-collecting tank 153 and the heat dissipator 131, so that the power device 151 is in a normal operating temperature range, and performance of the power device 151 is fully utilized.

For example, the power module 15 shown in FIG. 3 uses an indirect contact liquid cooling structure. The power module 15 includes a power device 151 and a heat exchange plate 154. The power device 151 is attached to the heat exchange plate 154 by using a thermally conductive medium. Heat generated by the power device 151 is transferred to a first heat transfer medium inside the heat exchange plate 154 through the thermally conductive medium, and then the heat is taken away by the flowing first heat transfer medium.

In an example, the valve module 14 is connected between the heat exchange plate 154 in the power module 15 and the battery liquid-collecting tank 113 in the energy storage module 11, and is configured to connect or disconnect a path between the heat exchange plate 154 and the battery liquid-collecting tank 113. In other words, the first heat transfer medium may transfer heat generated by the power device 151 to the battery liquid-collecting tank 113, and is in contact with the battery capsule 112 in the battery liquid-collecting tank 113, to transfer the heat to the battery capsule 112. The battery capsule 112 may transfer the heat to the battery 111, to transfer the heat generated by the power device 151 to the battery 111. In this way, both the battery 111 and the power device 151 can operate at an appropriate temperature, and operating performance of the battery 111 and the power device 151 is fully utilized.

In another example, the valve module 14 is connected between the heat exchange plate 154 and the heat dissipator 131, and is configured to connect or disconnect a path between the heat exchange plate 154 and the heat dissipator 131. During actual application, when the power device 151 generates high heat, the heat may be transferred to the heat dissipator 131 through the path between the heat exchange plate 154 and the heat dissipator 131, so that the power device 151 is in a normal operating temperature range, and performance of the power device 151 is fully utilized.

It should be noted that, for a specific structure of the power module 15, refer to the specific structure of the energy storage module 11 in FIG. 2. For example, at least one liquid inlet and at least one liquid outlet are provided on a side surface of the power device liquid-collecting tank 153, the first heat transfer medium flows into the power device liquid-collecting tank 153 through the liquid inlet, and the first heat transfer medium flows out of the power device liquid-collecting tank 153 through the liquid outlet. For example, heat dissipation fins may also be disposed on an inner surface or an outer surface of the power device capsule 152, and the heat dissipation fins are configured to increase an area of contact between the second heat transfer medium and the inner surface or the outer surface of the power device capsule 152. For example, the power device capsule 152 may be of a fully sealed structure. Disposing the power device capsule 152 as a fully sealed structure can ensure gas tightness of a cavity, and avoid leakage of a gas-phase working medium.

In summary, in the examples provided in this application, effectively adjusting and controlling connected and disconnected states of different ports in the valve module 14 can flexibly adjust connected states of different modules, to facilitate multifaceted adjustment of temperatures of the battery 111 and the power device 151.

It should be noted that, in the examples provided in this application, the valve module 14 may be a ten-way valve, an eight-way valve, a four-way valve, or the like. This is not limited in this application. If the valve module 14 is a ten-way valve, it indicates that the valve module 14 has ten ports, which may be denoted as a port 1, a port 2, a port 3, a port 4, a port 5, a port 6, a port 7, a port 8, a port 9, and a port 10. For example, when the port 7 is connected to the port 9, the first heat transfer medium may flow between the port 7 and the port 9. In addition, each port can be connected to or disconnected from at least one of other ports. Alternatively, it may be understood that each port can be connected to or disconnected from any other port, and each port can be simultaneously connected to at least two ports. During actual application, connected states of different ports in the valve module 14 can be effectively adjusted according to an actual requirement.

In some embodiments, the immersion liquid cooling energy storage system may further include an electric heater 16. The electric heater 16 may be configured to heat the first heat transfer medium, to increase a temperature of a surface of the battery 111. During specific disposing, the electric heater 16 may be disposed in various positions. For example, the electric heater 16 may be disposed in series at an end of the battery liquid-collecting tank 113 or an end of the evaporator 124. Alternatively, in another example, the electric heater 16 may be located in an independent pipe, and two ends of the pipe may communicate with the valve module 14, so that the pipe can communicate with the battery liquid-collecting tank 113 in the energy storage module 11.

In some embodiments, two water pumps are further disposed in the immersion liquid cooling energy storage system, which are a water pump 17a and a water pump 17b. The water pump 17a is disposed at an end of the battery liquid-collecting tank 113, and is configured to accelerate a flow speed of the first heat transfer medium flowing through the battery liquid-collecting tank 113, to improve efficiency in dissipating heat from the battery 111. The water pump 17b is disposed at an end of the heat dissipator 131, and is configured to accelerate a flow speed of the first heat transfer medium flowing through the heat dissipator 131, to improve heat dissipation efficiency of the heat dissipator 131. It should be understood that, during actual application, disposing positions of the water pump 17a and the water pump 17b may be flexibly set, provided that the water pump 17a can accelerate the flow speed of the first heat transfer medium flowing through the battery liquid-collecting tank 113, and the water pump 17b can accelerate the flow speed of the first heat transfer medium flowing through the heat dissipator 131. Disposing positions of the water pump 17a and the water pump 17b are not limited in this application.

A running mode of the immersion liquid cooling energy storage system includes a heating mode and a cooling mode. In response to the temperature of the battery 111 being less than a first preset value, the immersion liquid cooling energy storage system runs in the heating mode, and the thermal management module 12 is configured to heat the first heat transfer medium. In response to the temperature of the battery 111 being greater than a second preset value, the immersion liquid cooling energy storage system runs in the cooling mode, and the thermal management module 12 is configured to cool the first heat transfer medium.

Specifically, the immersion liquid cooling energy storage system includes a controller (not shown in the figure). In response to the temperature of the battery 111 being less than the first preset value, the controller is configured to control the immersion liquid cooling energy storage system to run in the heating mode. In response to the temperature of the battery 111 being greater than the second preset value, the controller is configured to control the immersion liquid cooling energy storage system to run in the cooling mode.

In an example, in response to the immersion liquid cooling energy storage system running in the cooling mode, the controller is configured to control the valve module 14 to connect the path between the heat dissipator 131 and the battery liquid-collecting tank 113. In this case, the first heat transfer medium may be transferred from the battery liquid-collecting tank 113 to the heat dissipator 131, and then transferred back to the battery liquid-collecting tank 113 after heat dissipation by the heat dissipator 131, so that heat generated by the battery 111 can be dissipated.

In an example, the controller is configured to: control the thermal management module 12 to open the first throttle valve 123 and start the compressor 121, and control the valve module 14 to connect the path between the evaporator 124 and the battery liquid-collecting tank 113. In this case, the first heat transfer medium may be transferred from the battery liquid-collecting tank 113 to the evaporator 124, and then transferred back to the battery liquid-collecting tank 113 after exchanging heat with a refrigerant in the evaporator 124, so that heat generated by the battery 111 can be dissipated. In an example, the controller is configured to control the valve module 14 to connect the path between the condenser 122 and the heat dissipator 131, so that the heat dissipator 131 can dissipate heat in the condenser 122.

In an example, the controller is configured to: control the thermal management module 12 to open the first throttle valve 123 and control the compressor 121 to start, and control the valve module 14 to connect the path between the condenser 122 and the battery liquid-collecting tank 113. In this case, heat in the condenser 122 may be taken to the battery liquid-collecting tank 113, so that the battery 111 can be heated.

In an example, the controller is configured to control the electric heater 16 to be turned on, and the electric heater 16 is used to heat the first heat transfer medium, to achieve an objective of heating the battery 111.

In an example, the controller is configured to control the valve module 14 to connect the path between the battery liquid-collecting tank 113 and the power device liquid-collecting tank 153. In another example, the controller 20 is configured to control the valve module 14 to connect the path between the heat exchange plate 154 and the battery liquid-collecting tank 113. In this case, the battery 111 may be heated by using heat generated by the power device 151, so that the battery 111 can run at a relatively appropriate temperature.

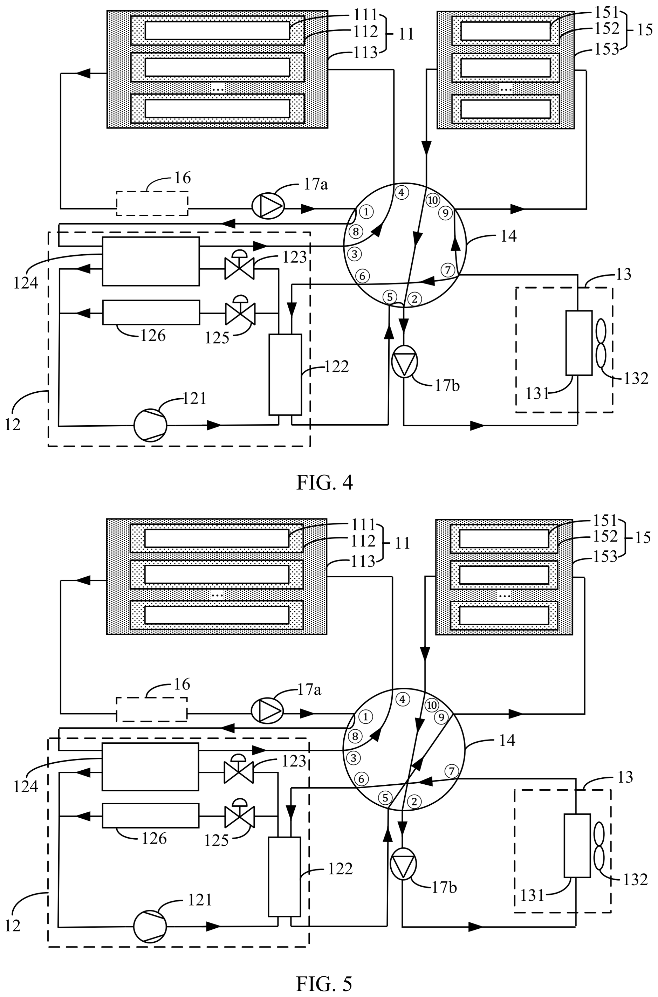

In the foregoing examples, for a flow direction of the first heat transfer medium, refer to FIG. 4 to FIG. 18. Details are not described herein.

In some embodiments, the running mode of the immersion liquid cooling energy storage system further includes a dehumidification mode. In response to humidity of air in a cabinet is greater than a third preset value, the immersion liquid cooling energy storage system runs in the dehumidification mode, and the thermal management module 12 is configured to reduce the humidity of the air in the cabinet. The cabinet may be configured to accommodate the energy storage module 11, the thermal management module 12, the heat dissipation module 13, the pipe system, the valve module 14, the power module 15, the electric heater 16, the water pump 17a, the water pump 17b, and the like.

For example, the controller is configured to: when it is determined that the running mode is the dehumidification mode, control the thermal management module 12 to open the second throttle valve 125 and start the compressor 121. The dehumidification evaporator 126 is used to reduce humidity in the immersion liquid cooling energy storage system (namely, the humidity of the air in the cabinet), so that a related electronic component (for example, a power device or a line) in the immersion liquid cooling energy storage system can operate in a relatively dry environment, to avoid a bad case such as corrosion or a short circuit. This helps ensure reliability and a service life of the electronic component.

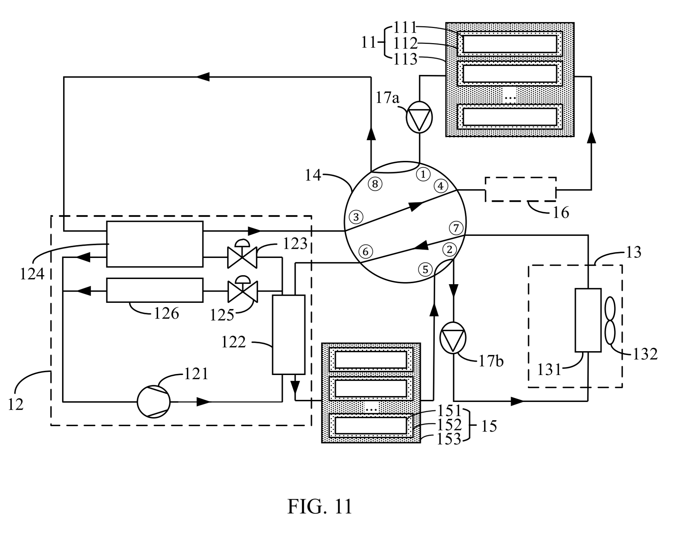

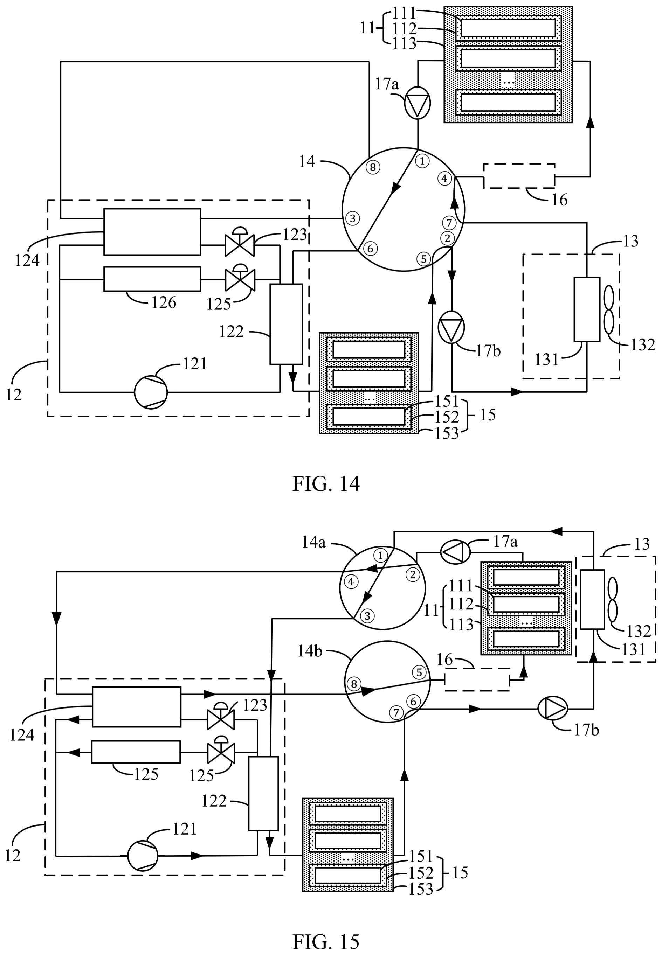

The foregoing shows structures of various components in the immersion liquid cooling energy storage system with reference to FIG. 1 to FIG. 3. The following describes a flow path of a medium (for example, the first heat transfer medium and a refrigerant) in the immersion liquid cooling energy storage system with reference to FIG. 4 to FIG. 18. The valve module 14 in FIG. 4 to FIG. 10 is a ten-way valve, the valve module 14 in FIG. 11 to FIG. 14 is an eight-way valve, and the valve module 14 in FIG. 15 to FIG. 18 includes two four-way valves.

FIG. 4 is a diagram of a flow path of a medium in an immersion liquid cooling energy storage system according to an embodiment of this application. It should be understood that FIG. 4 shows flow paths of the first heat transfer medium and a refrigerant in the immersion liquid cooling energy storage system in a case in which the immersion liquid cooling energy storage system runs in the cooling mode and the dehumidification mode.

When the temperature of the battery is greater than the second preset value and the humidity of the air in the cabinet is greater than the third preset value, for transfer paths of the first heat transfer medium and the refrigerant in the immersion liquid cooling energy storage system, refer to directions shown by arrows in FIG. 4. A circulation loop in the immersion liquid cooling energy storage system includes the following five parts, and heat dissipation of the battery 111 and the power device 151 is completed by using the five parts of circulation loops.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124. In the first circulation loop, the condenser 122 has a high temperature and needs to dissipate heat, the refrigerant in the evaporator 124 evaporates and absorbs a large amount of heat, and the evaporator 124 is configured to absorb heat of the first cooling medium to cool the battery 111.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device) in the immersion liquid cooling energy storage system operates in a relatively dry environment, to avoid a bad case such as corrosion or a short circuit.

A third part of circulation loop is a third circulation loop formed by the energy storage module 11 and the evaporator 124 in the thermal management module 12. The third circulation loop mainly cools the battery by using the evaporator 124. In the third circulation loop, in the ten-way valve, a port 1 may be connected to a port 8, and a port 3 may be connected to a port 4. A flow path of the first heat transfer medium is sequentially: the battery liquid-collecting tank 113, the water pump 17a, the port 1, the port 8, the evaporator 124, the port 3, and the port 4. It should be understood that, in the third circulation loop, the first heat transfer medium and the refrigerant may exchange heat with each other in the evaporator 124, so that a temperature of the first heat transfer medium can be reduced, and further the battery 111 can be cooled.

A fourth part of circulation loop is a fourth circulation loop formed by the condenser 122 and the heat dissipator 131. The fourth circulation loop mainly dissipates heat from the condenser 122, and heat is dissipated to the external environment by using the heat dissipator 131. In the fourth circulation loop, in the ten-way valve, a port 7 is connected to a port 6, and a port 5 is connected to a port 2. A flow path of the first heat transfer medium is sequentially: the condenser 122, the port 5, the port 2, the water pump 17b, the heat dissipator 131, the port 7, and the port 6.

A fifth part of circulation loop is a fifth circulation loop formed by the power module 15 and the heat dissipation module 13. The fifth circulation loop mainly dissipates heat from the power device 151. In the fifth circulation loop, in the ten-way valve, the port 7 may be connected to a port 9, and a port 10 may be connected to the port 2. The first heat transfer medium in the power device liquid-collecting tank 153 may circulate in the fifth circulation loop for heat dissipation, to dissipate heat to the external environment. A flow path of the first heat transfer medium is sequentially: the power device liquid-collecting tank 153, the port 10, the port 2, the water pump 17b, the heat dissipator 131, the port 7, and the port 9. Specifically, the first heat transfer medium with heat in the power device liquid-collecting tank 153 may flow from the power device liquid-collecting tank 153 to the port 2 through the port 10 and flow into the heat dissipator 131, the heat dissipator 131 is used to dissipate the heat of the first heat transfer medium to the external environment, and the first heat transfer medium after the heat dissipation flows to the port 9 through the port 7 and flows back to the power device liquid-collecting tank 153. In this way, the power device 151 is cooled, so that the power device 151 operates at a relatively appropriate temperature, and operating performance of the power device 151 is fully utilized.

It should be noted that, in FIG. 4, the electric heater 16 is in an off state.

In addition, in another example, the battery 111 may alternatively be cooled by using the heat dissipator 131. For example, in the valve module 14, the port 7 may be connected to the port 4, and the port 1 may be connected to the port 2. In this case, a flow path of the first heat transfer medium further includes: the battery liquid-collecting tank 113, the water pump 17a, the port 1, the port 2, the water pump 17b, the heat dissipator 131, the port 7, and the port 4. In this way, the first heat transfer medium can circulate between the battery liquid-collecting tank 113 and the heat dissipator 131, and therefore the heat dissipator 131 can be used to dissipate heat from the battery 111, so that the battery 111 operates at a relatively appropriate temperature, and operating performance of the battery 111 is fully utilized.

FIG. 5 is a diagram of a flow path of a medium in another immersion liquid cooling energy storage system according to an embodiment of this application. It should be understood that FIG. 5 shows flow paths of the first heat transfer medium and a refrigerant in the immersion liquid cooling energy storage system in a case in which the immersion liquid cooling energy storage system runs in the cooling mode and the dehumidification mode.

When the temperature of the battery is greater than the second preset value and the humidity of the air in the cabinet is greater than the third preset value, for transfer paths of the first heat transfer medium and the refrigerant in the immersion liquid cooling energy storage system, refer to directions shown by arrows in FIG. 5. A circulation loop in the immersion liquid cooling energy storage system may include the following four parts, and heat dissipation of the battery 111 and the power device 151 is completed by using the four parts of circulation loops.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124. In the first circulation loop, the condenser 122 has a high temperature and needs to dissipate heat, and the evaporator 124 has a low temperature and may cool the battery 111.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device) in the immersion liquid cooling energy storage system operates in a relatively dry environment, to avoid a bad case such as corrosion or a short circuit.

A third part of circulation loop is a third circulation loop formed by the energy storage module 11 and the evaporator 124 in the thermal management module 12. The first circulation loop mainly dissipates heat from the battery 111 by using the evaporator 124. In the first circulation loop, in the ten-way valve, a port 1 may be connected to a port 8, and a port 3 may be connected to a port 4. A flow path of the first heat transfer medium is sequentially: the battery liquid-collecting tank 113, the water pump 17a, the port 1, the port 8, the evaporator 124, the port 3, and the port 4. It should be understood that, in the first circulation loop, the first heat transfer medium and the refrigerant may exchange heat with each other in the evaporator 124, so that a temperature of the first heat transfer medium can be reduced, and further the battery 111 can be cooled.

A fourth part of circulation loop is a fourth circulation loop formed by the power module 15, the heat dissipation module 13, and the condenser 122 in the thermal management module 12. In the fourth circulation loop, the power module 15, the heat dissipation module 13, and the condenser 122 in the thermal management module 12 may be connected in series through a pipe. The fourth circulation loop may simultaneously dissipate heat from the power device 151 and the condenser 122. In the fourth circulation loop, in the ten-way valve, a port 10 may be connected to a port 2, a port 7 may be connected to a port 6, and a port 5 may be connected to a port 9. Specifically, a flow path of the first heat transfer medium is sequentially: the power device liquid-collecting tank 153, the port 10, the port 2, the water pump 17b, the heat dissipator 131, the port 7, the port 6, the condenser 122, the port 5, and the port 9. This circulation is repeated to dissipate heat from the power device 151 and the condenser 122.

It should be noted that, in the immersion liquid cooling energy storage system shown in FIG. 4, the port 7 in the ten-way valve is connected in parallel with the port 9 and the port 6 separately. However, in actual processing, processing costs of the port 7 are high. Therefore, in the immersion liquid cooling energy storage system shown in FIG. 5, the power device liquid-collecting tank 153, the heat dissipator 131, and the condenser 122 may be connected in series, to reduce complexity in manufacturing the ten-way valve in an actual processing process. However, a path of the fourth circulation loop is relatively long, a running path of the first heat transfer medium is long, and required pump power consumption is relatively high.

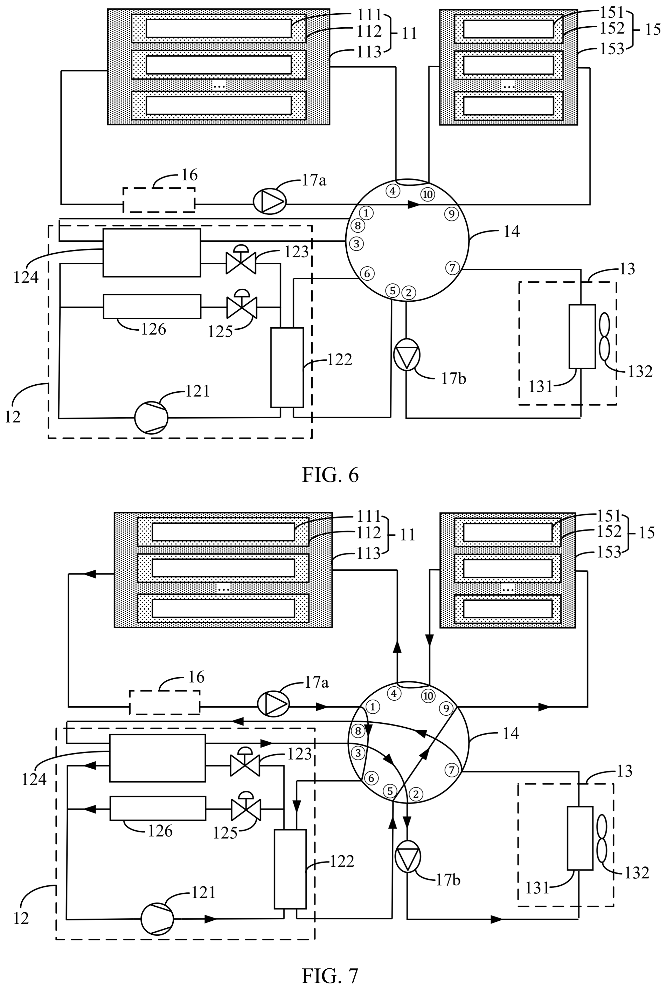

FIG. 6 is a diagram of a flow path of a medium in another immersion liquid cooling energy storage system according to an embodiment of this application. It should be understood that FIG. 6 shows a flow path of the first heat transfer medium in the immersion liquid cooling energy storage system in a case in which the immersion liquid cooling energy storage system runs in the heating mode.

It should be understood that, in a low-temperature scenario in winter, when the temperature of the battery is less than the first preset value, the battery 111 needs to be heated, and the power device 151 needs to dissipate heat. Therefore, in some embodiments, the energy storage module 11 may be connected to the power module 15 in series, and the battery 111 may directly obtain heat of the power device 151 for heat recovery. In other words, the energy storage module 11 may recycle heat generated by the power module 15, to reduce energy consumption of the immersion liquid cooling energy storage system and reduce costs.

In some embodiments, for a transfer path of the first heat transfer medium in the immersion liquid cooling energy storage system, refer to a direction shown by an arrow in FIG. 6. In the immersion liquid cooling energy storage system, the energy storage module 11 and the power module 15 may be connected in series to form a first circulation loop. In the first circulation loop, in the ten-way valve, a port 10 may be connected to a port 4, and a port 1 may be connected to a port 9. Specifically, a flow path of the first heat transfer medium is sequentially: the power device liquid-collecting tank 153, the port 10, the port 4, the battery liquid-collecting tank 113, the port 1, and the port 9. This circulation is repeated, so that the battery 111 can use heat generated by the power device 151. In this way, the battery 111 and the power device 151 keep operating at a relatively appropriate temperature, and performance of the battery 111 and the power device 151 is fully utilized.

In some embodiments, when the heat generated by the power device 151 cannot satisfy a need of the battery 111, the electric heater 16 may be started to heat the first heat transfer medium in the first circulation loop, and the first heat transfer medium may be transferred back to the battery liquid-collecting tank 113 through the first circulation loop, to heat the battery 111.

FIG. 7 is a diagram of a flow path of a medium in another immersion liquid cooling energy storage system according to an embodiment of this application. It should be understood that FIG. 7 shows flow paths of the first heat transfer medium and a refrigerant in the immersion liquid cooling energy storage system in a case in which the immersion liquid cooling energy storage system runs in the heating mode and the dehumidification mode.

It should be understood that, in a low-temperature and high-humidity scenario in winter, when the temperature of the battery is less than the first preset value and humidity of air in an environmental cabinet is greater than humidity of the third preset value, heat provided by the power module 15 may be insufficient to satisfy a need of the energy storage module 11. In this case, the battery 111 may be heated by using heat generated by the condenser 122 in the thermal management module 12.

For transfer paths of the first heat transfer medium and the refrigerant in the immersion liquid cooling energy storage system, refer to directions shown by arrows in FIG. 7. A circulation loop in the immersion liquid cooling energy storage system may include the following four parts, and heating of the battery 111 and heat dissipation of the power device 151 are completed by using the four parts of circulation loops.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124. In the first circulation loop, the condenser 122 has a high temperature and can provide heat required by the battery 111, the evaporator 124 has a low temperature, and the evaporator 124 needs to be heated.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device or a line) in the immersion liquid cooling energy storage system operates in a relatively dry environment, to avoid a bad case such as corrosion or a short circuit.

A third part of circulation loop is a third circulation loop formed by the energy storage module 11, the power module 15, and the condenser 122 in the thermal management module 12. The third circulation loop may be used to heat the battery 111 and dissipate heat from the power device 151. In the third circulation loop, in the ten-way valve, a port 10 may be connected to a port 4, a port 1 may be connected to a port 6, and a port 5 may be connected to a port 9. Specifically, a flow path of the first heat transfer medium in the third circulation loop is sequentially: the battery liquid-collecting tank 113, the water pump 17a, the port 1, the port 6, the condenser 122, the port 5, the port 9, the power device liquid-collecting tank 153, the port 10, and the port 4. This circulation is repeated, so that the battery 111 can be heated and heat can be dissipated from the power device 151. In this way, the battery 111 and the power device 151 keep operating at a relatively appropriate temperature, and performance of the battery 111 and the power device 151 is fully utilized.

A fourth part of circulation loop is a fourth circulation loop formed by the heat dissipation module 13 and the evaporator 124 in the thermal management module 12. The fourth circulation loop mainly dissipates cold air in the evaporator 124 to the external environment by using the heat dissipator 131 in the heat dissipation module 13. In the fourth circulation loop, in the ten-way valve, a port 7 may be connected to a port 8, and a port 3 may be connected to a port 2. Specifically, a flow path of the first heat transfer medium in the fourth circulation loop is sequentially: the evaporator 124, the port 3, the port 2, the water pump 17b, the heat dissipator 131, the port 7, and the port 8. This circulation is repeated to dissipate cold air in the evaporator 124 to the external environment.

In some embodiments, when heat generated by the power device 151 and the condenser 122 cannot satisfy a need of the battery 111, the electric heater 16 may be started to heat the first heat transfer medium in the third circulation loop, and the first heat transfer medium may be transferred back to the battery liquid-collecting tank 113 through the first circulation loop, to heat the battery 111.

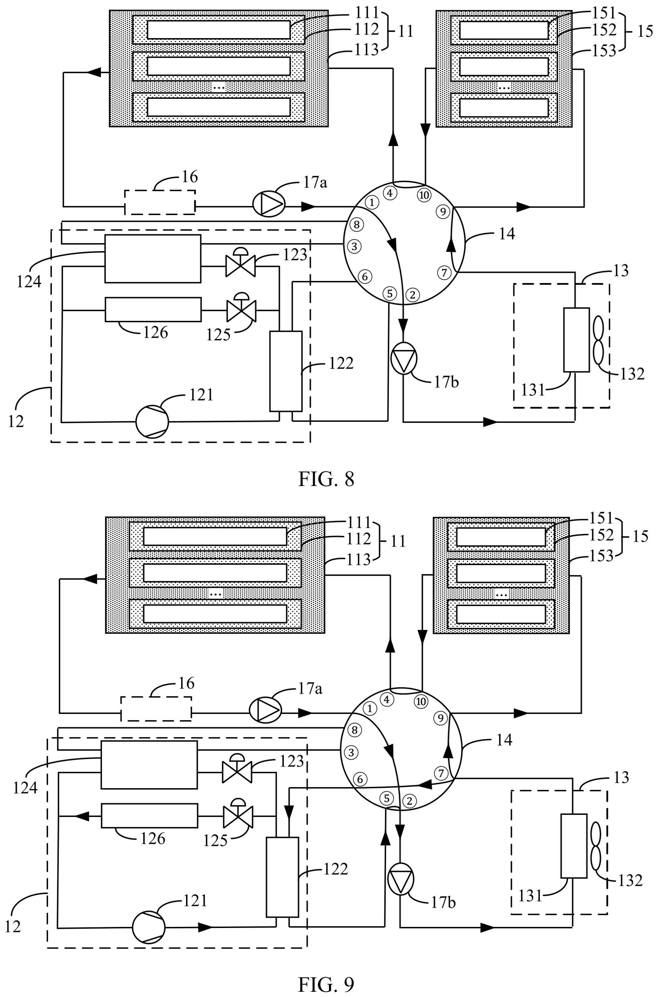

FIG. 8 is a diagram of a flow path of a medium in another immersion liquid cooling energy storage system according to an embodiment of this application. It should be understood that FIG. 8 shows a flow path of the first heat transfer medium in the immersion liquid cooling energy storage system in a case in which the immersion liquid cooling energy storage system runs in the cooling mode.

It should be understood that, in a transition season (namely, spring or autumn), when an ambient temperature of the battery is greater than the second preset value, heat may be dissipated from the battery 111 and the power device 151 through natural heat dissipation. In other words, heat is dissipated from the battery 111 and the power device 151 only by using the heat dissipator 131.

For a transfer path of the first heat transfer medium in the immersion liquid cooling energy storage system, refer to directions shown by arrows in FIG. 8. In the immersion liquid cooling energy storage system, the energy storage module 11, the power module 15, and the heat dissipation module 13 may be connected in series to form a first circulation loop. In the first circulation loop, in the ten-way valve, a port 10 may be connected to a port 4, a port 1 may be connected to a port 2, and a port 7 may be connected to a port 9. Specifically, a flow path of the first heat transfer medium in the first circulation loop is sequentially: the battery liquid-collecting tank 113, the water pump 17a, the port 1, the port 2, the water pump 17b, the heat dissipator 131, the port 7, the port 9, the power device liquid-collecting tank 153, the port 10, and the port 4. This circulation is repeated, so that heat generated by the battery 111 and the power device 151 can be dissipated through natural heat dissipation. In this way, the battery 111 and the power device 151 keep operating at a relatively appropriate temperature, and performance of the battery 111 and the power device 151 is fully utilized.

FIG. 9 is a diagram of a flow path of a medium in another immersion liquid cooling energy storage system according to an embodiment of this application. It should be understood that FIG. 9 shows flow paths of the first heat transfer medium and a refrigerant in the immersion liquid cooling energy storage system in a case in which the immersion liquid cooling energy storage system runs in the cooling mode and the dehumidification mode.

It should be understood that, in a transition season (namely, spring or autumn), when humidity is high, the dehumidification evaporator 126 may be used for dehumidification. After a dehumidification function is enabled, the condenser 122 in the thermal management module 12 needs to dissipate heat, and the heat may be dissipated by using the heat dissipation module 13.

For a transfer path of the first heat transfer medium in the immersion liquid cooling energy storage system, refer to directions shown by arrows in FIG. 9. A circulation loop in the immersion liquid cooling energy storage system may include the following three parts. A first part of circulation loop is mainly used to dissipate heat from the battery 111 and the power device 151. A second part of circulation loop is mainly used for dehumidification in the immersion liquid cooling energy storage system. A third part of circulation loop mainly discharges heat generated in the second part of circulation loop (namely, the condenser 122) to the external environment.

The first part of circulation loop is a first circulation loop formed by connecting the energy storage module 11, the power module 15, and the heat dissipation module 13 in series. The first circulation loop may be used to dissipate heat from the battery 111 and the power device 151. In the first circulation loop, in the ten-way valve, a port 10 may be connected to a port 4, a port 1 may be connected to a port 2, and a port 7 may be connected to a port 9. Specifically, a flow path of the first heat transfer medium in the first circulation loop is sequentially: the battery liquid-collecting tank 113, the water pump 17a, the port 1, the port 2, the water pump 17b, the heat dissipator 131, the port 7, the port 9, the power device liquid-collecting tank 153, the port 10, and the port 4. This circulation is repeated, so that heat generated by the battery 111 and the power device 151 can be dissipated through natural heat dissipation. In this way, the battery 111 and the power device 151 keep running at a relatively appropriate temperature, and performance of the battery 111 and the power device 151 is fully utilized.

The second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device or a line) in the immersion liquid cooling energy storage system operates in a relatively dry environment, to avoid a bad case such as corrosion or a short circuit.

The third part of circulation loop is a third circulation loop formed by the heat dissipation module 13 and the condenser 122 in the thermal management module 12. The third circulation loop is mainly used to dissipate heat in the condenser 122 to the external environment. In the third circulation loop, in the ten-way valve, a port 7 may be connected to a port 6, and a port 5 may be connected to a port 2. Specifically, a flow path of the first heat transfer medium in the third circulation loop is sequentially: the condenser 122, the port 5, the port 2, the heat dissipator 131, the port 7, and the port 6. This circulation is repeated, so that heat in the condenser 122 can be dissipated to the external environment through natural heat dissipation.

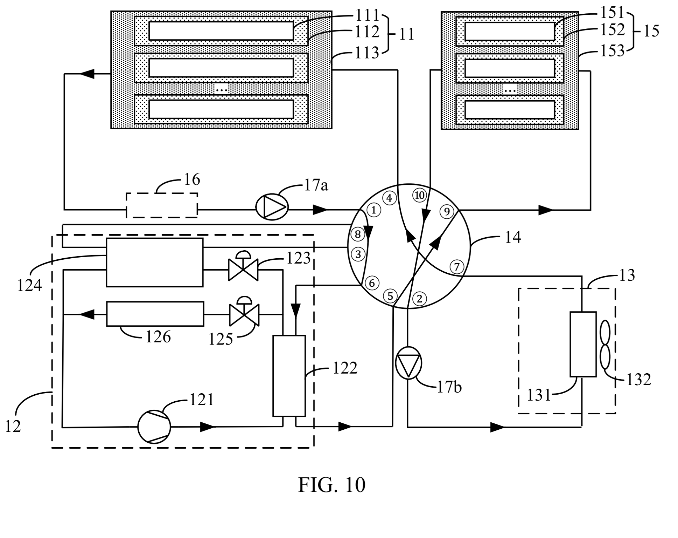

FIG. 10 is a diagram of a flow path of a medium in another immersion liquid cooling energy storage system according to an embodiment of this application. It should be understood that FIG. 10 shows flow paths of the first heat transfer medium and a refrigerant in the immersion liquid cooling energy storage system in a case in which the immersion liquid cooling energy storage system runs in the cooling mode and the dehumidification mode.

In some embodiments, for a heat transfer path in the immersion liquid cooling energy storage system, refer to directions shown by arrows in FIG. 10. A circulation loop in the immersion liquid cooling energy storage system may include the following two parts. A first part of circulation loop is mainly used to dissipate heat from the battery 111 and the power device 151 and discharge heat in the condenser 122 to the external environment. A second part of circulation loop is mainly used for dehumidification in the immersion liquid cooling energy storage system.

The first part of circulation loop is a first circulation loop formed by connecting the energy storage module 11, the condenser 122 in the thermal management module 12, the heat dissipation module 13, and the power module 15 in series. The first circulation loop may be used to dissipate heat from the battery 111 and the power device 151 and discharge heat in the condenser 122 to the external environment. In the first circulation loop, in the ten-way valve, a port 10 may be connected to a port 2, a port 7 may be connected to a port 4, a port 1 may be connected to a port 6, and a port 5 may be connected to a port 9. Specifically, a flow path of the first heat transfer medium in the first circulation loop is sequentially: the battery liquid-collecting tank 113, the water pump 17a, the port 1, the port 6, the condenser 122, the port 5, the port 9, the power device liquid-collecting tank 153, the port 10, the port 2, the water pump 17b, the heat dissipator 131, the port 7, and the port 4. This circulation is repeated, so that heat generated by the battery 111 and the power device 151 can be dissipated through natural heat dissipation, and heat in the condenser 122 can be dissipated to the external environment.

The second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device or a line) in the immersion liquid cooling energy storage system operates in a relatively dry environment, to avoid a bad case such as corrosion or a short circuit.

It should be noted that, in the immersion liquid cooling energy storage system shown in FIG. 9, the port 7 in the ten-way valve is connected in parallel with the port 9 and the port 6 separately. However, in actual processing, processing costs of the port 7 are high. Therefore, in the immersion liquid cooling energy storage system shown in FIG. 10, the energy storage module 11, the condenser 122 in the thermal management module 12, the heat dissipation module 13, and the power module 15 may be connected in series, to reduce manufacturing complexity in an actual processing process.

The foregoing describes, with reference to FIG. 4 to FIG. 10, a flow path of a medium in the immersion liquid cooling energy storage system in a case in which the valve module 14 is a ten-way valve. The following describes, with reference to FIG. 11 to FIG. 14, a flow path of a medium in the immersion liquid cooling energy storage system in a case in which the valve module 14 is an eight-way valve.

FIG. 11 is a diagram of a flow path of a medium in another immersion liquid cooling energy storage system according to an embodiment of this application.

In FIG. 11, the power module 15 (the power device liquid-collecting tank 153) and the condenser 122 may be connected in series in a same pipe, to reduce two ports. In other words, in the examples provided in this application, the valve module 14 may have eight ports, and each port can be connected to or disconnected from at least one of other ports. Alternatively, it may be understood that each port can be connected to or disconnected from any other port, and each port can be simultaneously connected to at least two ports. It should be noted that, in the examples provided in this application, the power module 15 (the power device liquid-collecting tank 153) may be located at a front end of the condenser 122, so that the first heat transfer medium first flows through the power device liquid-collecting tank 153 and then flows through the condenser 122. Certainly, in another example, the power module 15 (the power device liquid-collecting tank 153) may alternatively be located at a rear end of the condenser 122, so that the first heat transfer medium first flows through the condenser 122 and then flows through the power device liquid-collecting tank 153. This is not limited in this application.

During actual application, connected states of different ports in the valve module 14 can be effectively adjusted according to an actual requirement.

FIG. 11 shows a flow path of a medium in the immersion liquid cooling energy storage system in a case in which the immersion liquid cooling energy storage system runs in the cooling mode and the dehumidification mode, for example, in a case in which the temperature of the battery is greater than the second preset value and the humidity of the air in the cabinet is greater than the third preset value. Similar to the flow paths shown in FIG. 4, for transfer paths of the first heat transfer medium and a refrigerant in the immersion liquid cooling energy storage system, refer to directions shown by arrows in FIG. 11. A circulation loop in the immersion liquid cooling energy storage system may include the following four parts.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124. In the first circulation loop, the condenser 122 has a high temperature and needs to dissipate heat, and the evaporator 124 has a low temperature and may cool the battery 111.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device) in the immersion liquid cooling energy storage system operates in a relatively dry environment, to avoid a bad case such as corrosion or a short circuit.

A third part of circulation loop is a third circulation loop formed by the energy storage module 11 and the evaporator 124 in the thermal management module 12. The third circulation loop mainly dissipates heat from the battery 111 by using the evaporator 124. In the first circulation loop, in the eight-way valve, a port 1 may be connected to a port 8, and a port 3 may be connected to a port 4. A flow path of the first heat transfer medium is sequentially: the battery liquid-collecting tank 113, the water pump 17a, the port 1, the port 8, the evaporator 124, the port 3, and the port 4. It should be understood that, in the first circulation loop, the first heat transfer medium and the refrigerant may exchange heat with each other in the evaporator 124, so that a temperature of the first heat transfer medium can be reduced, and further the battery 111 can be cooled.

A fourth part of circulation loop is a fourth circulation loop formed by the condenser 122 in the thermal management module 12, the power module 15, and the heat dissipation module 13. The fourth circulation loop mainly dissipates heat from the power device 151 and the condenser 122. In the fourth circulation loop, in the eight-way valve, a port 7 may be connected to a port 6, and a port 5 may be connected to a port 2. A flow path of the first heat transfer medium is sequentially: the condenser 122, the power device liquid-collecting tank 153, the port 5, the port 2, the water pump 17b, the heat dissipator 13151, the port 7, and the port 6. In this way, the power device 151 and the condenser 122 are cooled, so that the power device 151 can operate at a relatively appropriate temperature.

It should be noted that, in FIG. 11, the electric heater 16 is in an off state.

In addition, in another example, the battery 111 may alternatively be cooled by using the heat dissipator 131. For example, in the valve module 14, the port 7 may be connected to the port 4, and the port 1 may be connected to the port 2. In this case, a flow path of the first heat transfer medium further includes: the battery liquid-collecting tank 113, the water pump 17a, the port 1, the port 2, the water pump 17b, the heat dissipator 131, the port 7, and the port 4.

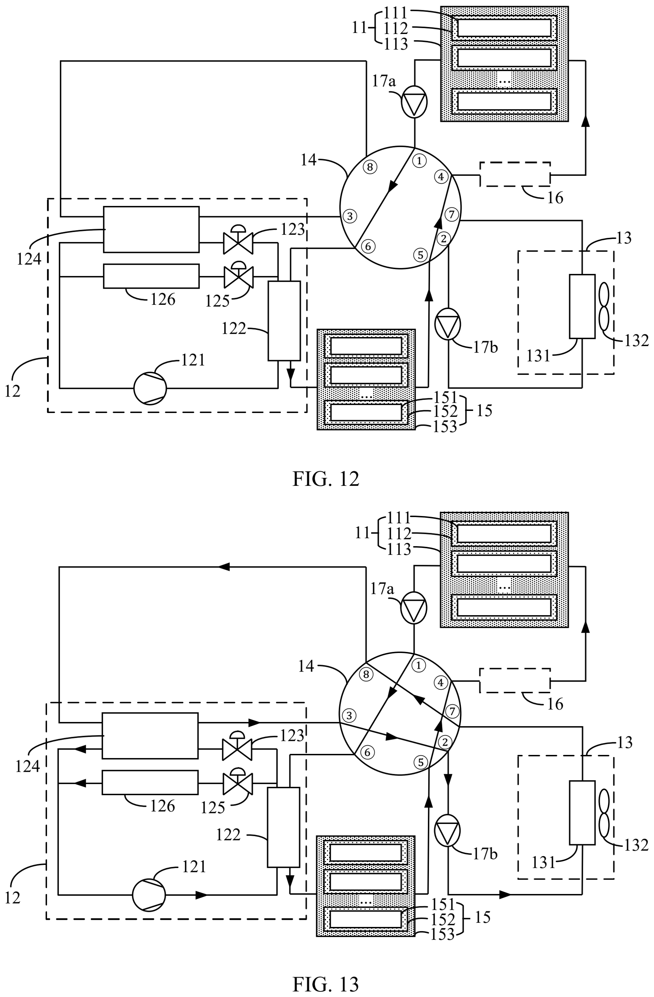

FIG. 12 is a diagram of a flow path of a medium in another immersion liquid cooling energy storage system according to an embodiment of this application. It should be understood that FIG. 12 shows a flow path of the first heat transfer medium in the immersion liquid cooling energy storage system in a case in which the immersion liquid cooling energy storage system runs in the heating mode.

It should be understood that, in a low-temperature scenario in winter, when the temperature of the battery is less than the first preset value, the battery 111 needs to be heated, and the power device 151 needs to dissipate heat. Therefore, in some embodiments, the energy storage module 11 may be connected to the power module 15 in series, and the battery 111 may directly obtain heat of the power device 151 for heat recovery. In other words, the energy storage module 11 may recycle heat generated by the power module 15, to reduce energy consumption of the immersion liquid cooling energy storage system and reduce costs.

Similar to the flow path shown in FIG. 6, for a transfer path of the first heat transfer medium in the immersion liquid cooling energy storage system, refer to a direction shown by an arrow in FIG. 12. In the immersion liquid cooling energy storage system, the energy storage module 11 and the power module 15 may be connected in series to form a first circulation loop. In the first circulation loop, in the eight-way valve, a port 5 may be connected to a port 4, and a port 1 may be connected to a port 6. Specifically, a flow path of the first heat transfer medium is sequentially: the power device liquid-collecting tank 153, the port 5, the port 4, the battery liquid-collecting tank 113, the port 1, and the port 6. This circulation is repeated, so that the battery 111 can use heat generated by the power device 151. In this way, the battery 111 and the power device 151 keep running at a relatively appropriate temperature, and performance of the battery 111 and the power device 151 is fully utilized.

In some embodiments, when the heat generated by the power device 151 cannot satisfy a need of the battery 111, the electric heater 16 may be started to heat the first heat transfer medium in the first circulation loop, and the first heat transfer medium may be transferred back to the battery liquid-collecting tank 113 through the first circulation loop, to heat the battery 111.

FIG. 13 is a diagram of a flow path of a medium in another immersion liquid cooling energy storage system according to an embodiment of this application. It should be understood that FIG. 13 shows flow paths of the first heat transfer medium and a refrigerant in the immersion liquid cooling energy storage system in a case in which the immersion liquid cooling energy storage system runs in the heating mode and the dehumidification mode.

Similar to the flow path shown in FIG. 7, in a low-temperature and high-humidity scenario in winter, when the temperature of the battery is less than the first preset value and humidity of air in an environmental cabinet is greater than humidity of the third preset value, for transfer paths of the first heat transfer medium and the refrigerant in the immersion liquid cooling energy storage system, refer to directions shown by arrows in FIG. 13. A circulation loop in the immersion liquid cooling energy storage system includes the following four parts.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126.

A third part of circulation loop is a third circulation loop formed by the energy storage module 11, the power module 15, and the condenser 122 in the thermal management module 12. The third circulation loop may heat the battery 111 and dissipate heat from the power device 151. In the third circulation loop, in the eight-way valve, a port 5 may be connected to a port 4, and a port 1 may be connected to a port 6. Specifically, a flow path of the first heat transfer medium in the third circulation loop is sequentially: the battery liquid-collecting tank 113, the water pump 17a, the port 1, the port 6, the condenser 122, the power device liquid-collecting tank 153, the port 5, and the port 4. This circulation is repeated, so that the battery 111 can be heated and heat can be dissipated from the power device 151.

A fourth part of circulation loop is a fourth circulation loop formed by the heat dissipation module 13 and the evaporator 124 in the thermal management module 12. The fourth circulation loop mainly dissipates cold air in the evaporator 124 to the external environment by using the heat dissipator 131 in the heat dissipation module 13. In the fourth circulation loop, in the eight-way valve, a port 7 may be connected to a port 8, and a port 3 may be connected to a port 2. Specifically, a flow path of the first heat transfer medium in the fourth circulation loop is sequentially: the evaporator 124, the port 3, the port 2, the water pump 17b, the heat dissipator 131, the port 7, and the port 8. This circulation is repeated to dissipate cold air in the evaporator 124 to the external environment.

In some embodiments, when heat generated by the power device 151 and the condenser 122 cannot satisfy a need of the battery 111, the electric heater 16 may be started to heat the first heat transfer medium flowing through the battery liquid-collecting tank 113, to heat the battery 111.

FIG. 14 is a diagram of a flow path of a medium in another immersion liquid cooling energy storage system according to an embodiment of this application. It should be understood that FIG. 14 shows a flow path of the first heat transfer medium in the immersion liquid cooling energy storage system in a case in which the immersion liquid cooling energy storage system runs in the cooling mode.

It should be understood that, when an ambient temperature of the battery is greater than the second preset value, heat may be dissipated from the battery 111 and the power device 151 through natural heat dissipation. In other words, heat is dissipated from the battery 111 and the power device 151 only by using the heat dissipator 131.

Similar to the flow path shown in FIG. 8, for a transfer path of the first heat transfer medium in the immersion liquid cooling energy storage system, refer to directions shown by arrows in FIG. 14. In the immersion liquid cooling energy storage system, the energy storage module 11, the power module 15, and the heat dissipation module 13 may be connected in series to form a first circulation loop. In the first circulation loop, in the eight-way valve, a port 5 may be connected to a port 2, a port 7 may be connected to a port 4, and a port 1 may be connected to a port 6. Specifically, a flow path of the first heat transfer medium in the first circulation loop is sequentially: the battery liquid-collecting tank 113, the water pump 17a, the port 1, the port 6, the condenser 122, the power device liquid-collecting tank 153, the port 5, the port 2, the water pump 17b, the heat dissipator 131, the port 7, and the port 4. This circulation is repeated, so that heat generated by the battery and the power device can be dissipated through natural heat dissipation. In this way, the battery 111 and the power device 151 keep running at a relatively appropriate temperature, and performance of the battery 111 and the power device 151 is fully utilized.

It may be understood that, in the immersion liquid cooling energy storage systems in FIG. 4 to FIG. 14, one valve module is used. In addition, in another example, there may be two, three, or more valve modules 14.

For example, as shown in FIG. 15 to FIG. 18, an embodiment of this application further provides an immersion liquid cooling energy storage system including two valve modules 14. In other words, the valve module 14 may include a valve 14a and a valve 14b. Both the valve 14a and the valve 14b are four-way valves. In other words, each valve has four ports, and each port can be connected to or disconnected from at least one of other ports. Alternatively, it may be understood that each port can be connected to or disconnected from any other port, and each port can be simultaneously connected to at least two ports. Alternatively, it may be understood that two four-way valves may be used to replace the foregoing eight-way valve, so that flexibility is high. It should be understood that, compared with the ten-way valve and the eight-way valve, the four-way valve is easier to produce, and therefore the four-way valve is more widely used.

During actual application, connected states of different ports in the valve module 14 can be effectively adjusted according to an actual requirement.

FIG. 15 is a diagram of a flow path of a medium in an immersion liquid cooling energy storage system according to an embodiment of this application. It should be understood that FIG. 15 shows flow paths of the first heat transfer medium and a refrigerant in the immersion liquid cooling energy storage system in a case in which the immersion liquid cooling energy storage system runs in the cooling mode and the dehumidification mode.

Similar to the flow paths shown in FIG. 4 and FIG. 10, when the temperature of the battery is greater than the second preset value and the humidity of the air in the cabinet is greater than the third preset value, for transfer paths of the first heat transfer medium and the refrigerant in the immersion liquid cooling energy storage system, refer to directions shown by arrows in FIG. 15. A circulation loop in the immersion liquid cooling energy storage system may include the following four parts.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124. In the first circulation loop, the condenser 122 has a high temperature and needs to dissipate heat, and the evaporator 124 has a low temperature and may cool the battery 111.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126. In the second circulation loop, the dehumidification evaporator 126 may perform dehumidification, so that a related electronic component (for example, a power device or a line) in the immersion liquid cooling energy storage system operates in a relatively dry environment, to avoid a bad case such as corrosion or a short circuit.

A third part of circulation loop is a third circulation loop formed by the energy storage module 11 and the evaporator 124 in the thermal management module 12. The third circulation loop mainly dissipates heat from the battery 111 by using the evaporator 124. In the first circulation loop, a flow path of the first heat transfer medium is sequentially: the battery liquid-collecting tank 113, the water pump 17a, a port 1, a port 4, the evaporator 124, a port 8, and a port 5. It should be understood that, in the first circulation loop, the first heat transfer medium and the refrigerant may exchange heat with each other in the evaporator 124, so that a temperature of the first heat transfer medium can be reduced, and further the battery 111 can be cooled.

A fourth part of circulation loop is a fourth circulation loop formed by the condenser 122 in the thermal management module 12, the power module 15, and the heat dissipation module 13. The fourth circulation loop mainly dissipates heat from the power device 151 and the condenser 122. In the fourth circulation loop, a flow path of the first heat transfer medium is sequentially: the condenser 122, the power device liquid-collecting tank 153, a port 7, a port 6, the water pump 17b, the heat dissipator 13151, the port 1, and a port 3. In this way, the power device 151 and the condenser 122 are cooled, so that the power device 151 can operate at a relatively appropriate temperature.

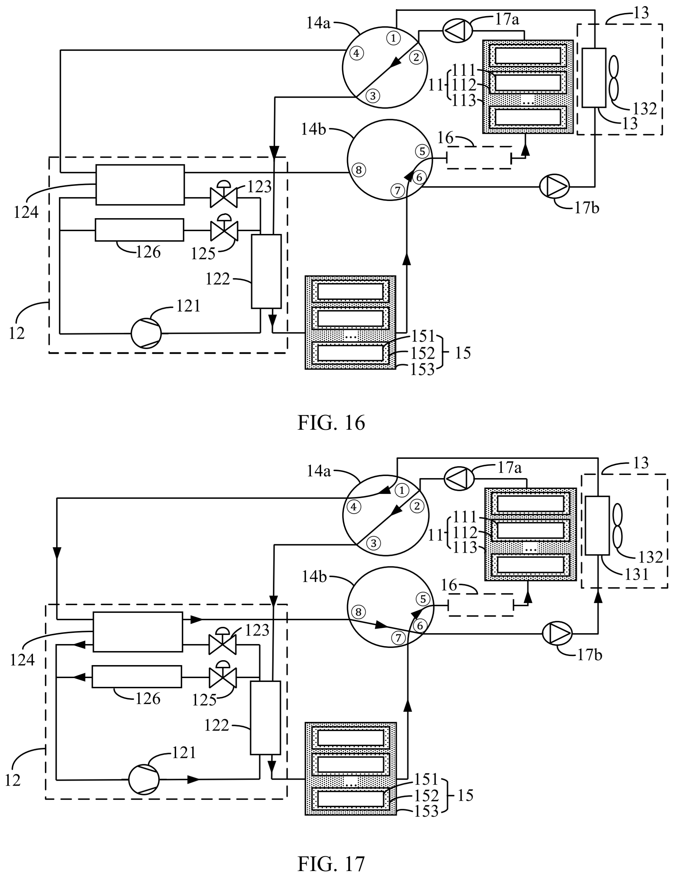

FIG. 16 is a diagram of a flow path of a medium in another immersion liquid cooling energy storage system according to an embodiment of this application. It should be understood that FIG. 16 shows a flow path of the first heat transfer medium in the immersion liquid cooling energy storage system in a case in which the immersion liquid cooling energy storage system runs in the heating mode.

It should be understood that, in a low-temperature scenario in winter, when the temperature of the battery is less than the first preset value, the battery 111 needs to be heated, and the power device 151 needs to dissipate heat. Therefore, in some embodiments, the energy storage module 11 may be connected to the power module 15 in series, and the battery 111 may directly obtain heat of the power device 151 for heat recovery. In other words, the energy storage module 11 may recycle heat generated by the power module 15, to reduce energy consumption of the immersion liquid cooling energy storage system and reduce costs.

In some embodiments, similar to the flow paths shown in FIG. 6 and FIG. 12, when the temperature of the battery is less than the first preset value, for a transfer path of the first heat transfer medium in the immersion liquid cooling energy storage system, refer to directions shown by arrows in FIG. 16. In the immersion liquid cooling energy storage system, the energy storage module 11 and the power module 15 may be connected in series to form a first circulation loop. In the first circulation loop, a flow path of the first heat transfer medium is sequentially: the battery liquid-collecting tank 113, the water pump 17a, a port 2, a port 3, the condenser 122, the power device liquid-collecting tank 153, a port 7, and a port 5. This circulation is repeated, so that the battery 111 can use heat generated by the power device 151. In this way, the battery 111 and the power device 151 keep running at a relatively appropriate temperature, and performance of the battery 111 and the power device 151 is fully utilized.

It should be noted that, during actual application, both the second throttle valve 125 and the compressor 121 may be set to an on state according to a requirement. In other words, according to an operating principle of a heat pump, the condenser 122 can have a high temperature, to provide heat to the battery 111. In addition, the electric heater 16 may also be started according to a requirement, to increase the temperature of the battery 111.

FIG. 17 is a diagram of a flow path of a medium in another immersion liquid cooling energy storage system according to an embodiment of this application. It should be understood that FIG. 17 shows flow paths of the first heat transfer medium and a refrigerant in the immersion liquid cooling energy storage system in a case in which the immersion liquid cooling energy storage system runs in the heating mode and the dehumidification mode.

Similar to the flow paths shown in FIG. 7 and FIG. 13, for transfer paths of the first heat transfer medium and the refrigerant in the immersion liquid cooling energy storage system, refer to directions shown by arrows in FIG. 17. A circulation loop in the immersion liquid cooling energy storage system includes the following four parts.

A first part of circulation loop is a first circulation loop formed by the compressor 121, the condenser 122, the first throttle valve 123, and the evaporator 124. A medium circulating in the circulation loop is a refrigerant, and a flow path of the refrigerant in the first circulation loop is sequentially: the compressor 121, the condenser 122, the first throttle valve 123, and the evaporator 124.

A second part of circulation loop is a second circulation loop formed by the compressor 121, the condenser 122, the second throttle valve 125, and the dehumidification evaporator 126. A medium circulating in the circulation loop is also a refrigerant, and a flow path of the refrigerant in the second circulation loop is sequentially: the compressor 121, the condenser 122, the second throttle valve 125, and the dehumidification evaporator 126.

A third part of circulation loop is a third circulation loop formed by the energy storage module 11, the power module 15, and the condenser 122 in the thermal management module 12. The third circulation loop may heat the battery and dissipate heat from the power device. In the third circulation loop, a flow path of the first heat transfer medium is sequentially: the battery liquid-collecting tank 113, the water pump 17a, a port 2, a port 3, the condenser 122, the power device liquid-collecting tank 153, a port 7, and a port 5. This circulation is repeated, so that the battery 111 can be heated and heat can be dissipated from the power device 151.

A fourth part of circulation loop is a fourth circulation loop formed by the heat dissipation module 13 and the evaporator 124 in the thermal management module 12. The fourth circulation loop mainly dissipates cold air in the evaporator 124 to the external environment by using the heat dissipator 131 in the heat dissipation module 13. In the fourth circulation loop, a flow path of the first heat transfer medium is sequentially: the evaporator 124, a port 8, a port 6, the water pump 17b, the heat dissipator 131, a port 1, and a port 4. This circulation is repeated to dissipate cold air in the evaporator 124 to the external environment.

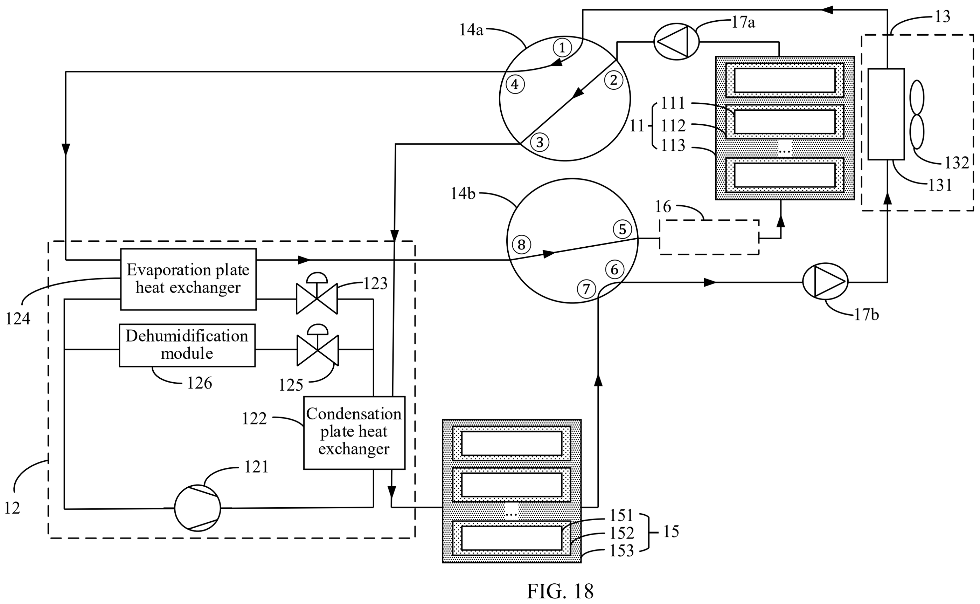

FIG. 18 is a diagram of a flow path of a medium in another immersion liquid cooling energy storage system according to an embodiment of this application. It should be understood that FIG. 18 shows a flow path of the first heat transfer medium in the immersion liquid cooling energy storage system in a case in which the immersion liquid cooling energy storage system runs in the cooling mode.

It should be understood that, in a transition season (namely, spring or autumn), when an ambient temperature of the battery is greater than the second preset value, heat may be dissipated from the battery 111 and the power device 151 through natural heat dissipation. In other words, heat generated by the battery 111 and the power device 151 is dissipated to the external environment only by using the heat dissipator 131.

Similar to the flow paths shown in FIG. 8 and FIG. 14, for a heat transfer path in the immersion liquid cooling energy storage system, refer to directions shown by arrows in FIG. 18. In the immersion liquid cooling energy storage system, the energy storage module 11, the power module 15, and the heat dissipation module 13 may be connected in series to form a first circulation loop. In the first circulation loop, a flow path of the first heat transfer medium is sequentially: the battery liquid-collecting tank 113, the water pump 17a, a port 2, a port 3, the condenser 122, the power device liquid-collecting tank 153, a port 7, a port 6, the water pump 17b, the heat dissipator 131, a port 1, a port 4, the evaporator 124, a port 8, and a port 5. This circulation is repeated, so that heat generated by the battery 111 and the power device 151 can be dissipated through natural heat dissipation. In this way, the battery 111 and the power device 151 keep running at a relatively appropriate temperature, and performance of the battery 111 and the power device 151 is fully utilized.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. An immersion liquid cooling energy storage system, wherein the immersion liquid cooling energy storage system comprises an energy storage module, a thermal management module, a heat dissipation module, a pipe system, and a valve module;
the energy storage module comprises a battery liquid-collecting tank, a battery capsule, and a battery, the battery liquid-collecting tank is configured to accommodate the battery capsule, the battery liquid-collecting tank is filled with a first heat transfer medium, and the first heat transfer medium is configured to heat or cool the battery capsule;
the battery capsule is configured to accommodate the battery, the battery capsule is filled with a second heat transfer medium, and the second heat transfer medium is configured to heat or cool the battery;
the thermal management module is configured to heat or cool the first heat transfer medium;
the heat dissipation module is configured to dissipate heat generated by the immersion liquid cooling energy storage system to an external environment; and
the valve module and the pipe system are configured to connect the energy storage module, the thermal management module, and the heat dissipation module, and the first heat transfer medium circulates among the energy storage module, the thermal management module, and the heat dissipation module.

2. The immersion liquid cooling energy storage system according to claim 1, wherein the immersion liquid cooling energy storage system further comprises a power module;
the power module comprises a power device liquid-collecting tank, a power device capsule, and a power device, the power device liquid-collecting tank is configured to accommodate the power device capsule, the power device liquid-collecting tank is filled with the first heat transfer medium, and the first heat transfer medium is configured to cool the power device capsule;
the power device capsule is configured to accommodate the power device, the power device capsule is filled with the second heat transfer medium, and the second heat transfer medium is configured to cool the power device; and
the power device is electrically connected to the battery.

3. The immersion liquid cooling energy storage system according to claim 2, wherein heat dissipation fins are disposed on inner surfaces of the battery capsule and the power device capsule, or heat dissipation fins are disposed on outer surfaces of the battery capsule and the power device capsule, or heat dissipation fins are disposed on both inner and outer surfaces of the battery capsule and the power device capsule.

4. The immersion liquid cooling energy storage system according to any one of claims 1 to 3, wherein the heat dissipation module comprises a heat dissipator and a fan; and the valve module is configured to be connected between the heat dissipator and the battery liquid-collecting tank, and is configured to connect or disconnect a path between the heat dissipator and the battery liquid-collecting tank.

5. The immersion liquid cooling energy storage system according to any one of claims 1 to 4, wherein the thermal management module comprises a compressor, a condenser, a first throttle valve, and an evaporator that are sequentially connected through the pipe system.

6. The immersion liquid cooling energy storage system according to any one of claims 1 to 5, wherein the immersion liquid cooling energy storage system further comprises an electric heater, and the electric heater is configured to heat the first heat transfer medium.

7. The immersion liquid cooling energy storage system according to claim 6, wherein the valve module and the pipe system are configured to connect the power module to the energy storage module, and the first heat transfer medium circulates among the energy storage module, the thermal management module, the heat dissipation module, and the power module.

8. The immersion liquid cooling energy storage system according to claim 1, wherein a running mode of the immersion liquid cooling energy storage system comprises a heating mode and a cooling mode, wherein
in response to a temperature of the battery being less than a first preset value, the immersion liquid cooling energy storage system runs in the heating mode, and the thermal management module is configured to heat the first heat transfer medium; or
in response to a temperature of the battery being greater than a second preset value, the immersion liquid cooling energy storage system runs in the cooling mode, and the thermal management module is configured to cool the first heat transfer medium.

9. The immersion liquid cooling energy storage system according to claim 8, wherein the immersion liquid cooling energy storage system performs, in response to the immersion liquid cooling energy storage system running in the heating mode, at least one of the following operations: controlling the valve module to connect a path between a condenser in the thermal management module and the battery liquid-collecting tank in the energy storage module; controlling the valve module to connect a path between a power device liquid-collecting tank in the power module and the battery liquid-collecting tank in the energy storage module; or starting an electric heater; or
the immersion liquid cooling energy storage system performs, in response to the immersion liquid cooling energy storage system running in the cooling mode, at least one of the following operations: controlling the valve module to connect a path between the battery liquid-collecting tank in the energy storage module and a heat dissipator in the heat dissipation module; or controlling the valve module to connect a path between the battery liquid-collecting tank in the energy storage module and an evaporator in the thermal management module.

10. The immersion liquid cooling energy storage system according to any one of claims 1 to 9, wherein the thermal management module comprises a second throttle valve and a dehumidification evaporator, and the compressor, the condenser, the second throttle valve, and the dehumidification evaporator are sequentially connected through the pipe system to form a dehumidification loop; and in response to humidity of air in the battery liquid-collecting tank being greater than a first threshold, the dehumidification loop is configured to reduce the humidity of the air in the battery liquid-collecting tank or humidity of air in the power device liquid-collecting tank.

11. The immersion liquid cooling energy storage system according to any one of claims 1 to 10, wherein the battery is partially or completely immersed in the second heat transfer medium.

12. The immersion liquid cooling energy storage system according to any one of claims 1 to 11, wherein the battery capsule is of a fully sealed structure.

13. The immersion liquid cooling energy storage system according to any one of claims 1 to 12, wherein the first heat transfer medium comprises any one of the following: oil, a fluorinated liquid, an ethylene glycol aqueous solution, nanofluid, and a phase change emulsion; and the second heat transfer medium is an oil working medium and/or a fluorinated liquid working medium.
